# EUROPÄISCHE PATENTANMELDUNG

(11) **EP 3 772 531 A1**
(43) Veröffentlichungstag der Anmeldung: **10.02.2021**
(21) Anmeldenummer: 19190852.4
(22) Anmeldetag: 08.08.2019
(51) Int. Cl.: C09D 5/24, C09D 7/40, H01B 1/24, D04H 13/00, H05B 3/10

(54) **BEHEIZBARES GLASFASERVLIES**

(71) Anmelder: Future Carbon GmbH, 95448 Bayreuth (DE)
(72) Erfinder: SCHÜTZ, Walter, 95448 Bayreuth (DE); KREMER, Max, 95448 Bayreuth (DE); FORERO, Stefan, 95448 Bayreuth (DE); TROLL, Carola, 95448 Bayreuth (DE); SCHÜTZ, Michael, 95448 Bayreuth (DE); JEHNES, Simon, 95448 Bayreuth (DE); BENRA, Jan, 95448 Bayreuth (DE)
(74) Vertreter: Müller, Christian Stefan Gerd

(57) **Zusammenfassung**

Die vorliegende Erfindung betrifft ein beheizbares Glasfaservlies, welches insbesondere geeignet ist, direkt auf ein Substrat oder auf eine auf dem Substrat befindliche Grundierung und/oder Kleberschicht angebracht zu werden, ein Glasfaservliesbauteil, enthaltend das beheizbare Glasfaservlies, ein Kit zum Herstellen eines Glasfaservliesbauteils und einen Gegenstand, einen Boden, eine Wand und/oder eine Decke, enthaltend das erfindungsgemäße beheizbare Glasfaservlies, Glasfaservliesbauteil und/oder Kit. Ferner betrifft die vorliegende Erfindung die Verwendung dieser Gegenstände zum Beheizen eines Gegenstandes, eines Bodens und/oder eines Raumes oder zum Abschirmen eines Gegenstandes und/oder Raumes vor elektromagnetischer Strahlung und ein Verfahren zum Beheizen eines Gegenstandes, Bodens und/oder Raumes unter Verwendung des erfindungsgemäßen beheizbaren Glasfaservlieses, Glasfaservliesbauteils und/oder Kits.

## Beschreibung

### Gebiet der Erfindung

Die vorliegende Erfindung betrifft ein beheizbares Glasfaservlies, welches insbesondere geeignet ist, direkt auf ein Substrat oder auf eine auf dem Substrat befindliche Grundierung und/oder Kleberschicht angebracht zu werden, ein Glasfaservliesbauteil, enthaltend das beheizbare Glasfaservlies, ein Kit zum Herstellen eines Glasfaservliesbauteils und einen Gegenstand, einen Boden, eine Wand und/oder eine Decke, enthaltend das erfindungsgemäße beheizbare Glasfaservlies, Glasfaservliesbauteil und/oder Kit. Ferner betrifft die vorliegende Erfindung die Verwendung dieser Gegenstände zum Beheizen eines Gegenstandes, eines Bodens und/oder eines Raumes oder zum Abschirmen eines Gegenstandes und/oder Raumes vor elektromagnetischer Strahlung und ein Verfahren zum Beheizen eines Gegenstandes, Bodens und/oder Raumes unter Verwendung des erfindungsgemäßen beheizbaren Glasfaservlieses, Glasfaservliesbauteils und/oder Kits.

### Hintergrund

Die Beheizung der Oberfläche eines Objektes oder Körpers ist in vielen Lebenslagen erforderlich, wobei bei der Beheizung von Räumen vielerorts elektrische Wandheizvorrichtungen, die beispielsweise mäanderförmige Heizdrähte aufweisen, oder wassergestützte Boden- und/oder Wandheizvorrichtungen, in denen erwärmtes Wasser zirkuliert, eingesetzt werden können. Gemein ist diesen Heizvorrichtungen, dass sie Wandoberflächen auf eine gewünschte Temperatur erwärmen, wobei, da diese erwärmten Wände mit den übrigen mobilen und immobilen Gegenständen des Raumes (wie Möbel, Luft, Decke, Fußboden und Wände, an denen keine Boden- und/oder Wandheizvorrichtung befestigt ist) im Temperaturaustausch stehen, diese übrigen mobilen und immobilen Gegenstände des Raumes schlussendlich die gleiche Temperatur wie die erwärmten Wände aufweisen.

Auch ist die Verwendung einer leitfähigen Beschichtung, üblicherweise enthaltend ein oder mehrere leitfähige Zusatzstoffe, zur Anbringung auf der Baustelle (also "vor Ort"), grundsätzlich bekannt. Eine direkte Auftragung derartiger Beschichtungen auf einer Wand und/oder einer Decke "vor Ort" kann grundsätzlich den Vorteil haben, dass eine individuelle Anpassung an die räumlichen Gegebenheiten möglich ist. Jedoch hat dies den Nachteil, dass mehrere Arbeitsschritte und Trocknungsschritte vor Ort notwendig sind und somit die Bauzeit verlängert wird. Unter Umständen ist zudem eine fachgerechte Anbringung vor Ort nicht immer gewährleistet, so dass die tatsächlich erreichte Heizleistung wesentlich geringer ausfällt als die bei fachgerechtem Anbringen erreichbare. Zudem ist in vielen Bereichen die Anbringung eines Glasfaservlieses wünschenswert, beispielsweise in einem Dachgeschoss, da Dachstühle aus Holz in Bewegung sind und andere Oberflächen (beispielsweise Raufasertapete) reißen könnten und Gipsfaserplatten Risse bekommen können. Die Anbringung eines Glasfaservlieses über einer beheizbaren Schicht könnte jedoch die Heizleistung dieser Schicht verringern und/oder zu einem Wärmestau führen. Zudem ist die fachgerechte Abbringung einer leitfähigen Beschichtung auf einem Glasfaservlies (oder darüber liegenden Schichten) "vor Ort" nicht oder nur eingeschränkt möglich. Darüber hinaus wären ebenfalls mehrere Arbeitsschritte und Trocknungsschritte vor Ort notwendig was zu einer Verlängerung der Bauzeit führen würde.

Zudem kann es wünschenswert sein, Gegenstände, wie beispielsweise Rohre, Werkzeuge, etc. zu beheizen. Die Verwendung einer wassergestützten Heizung beansprucht jedoch eine Menge Platz. Zudem ist eine homogene Beheizung u.U. schwierig. Die Verwendung beheizbarer Beschichtungen ist hierfür prinzipiell denkbar. Jedoch werden derartige Beschichtungen u.U. durch thermische Expansion des beheizten Gegenstandes beschädigt, oder es müssen entsprechende Vorkehrungen getroffen werden, dass dies nicht passiert, was weiteren Platz beanspruchen kann.

### Zusammenfassung der Erfindung

Aufgabe der vorliegenden Erfindung ist es somit, ein Glasfaservlies bereitzustellen, welches einfach montiert werden kann und welches eine zuverlässige Beheizung ermöglicht. Zudem sollte dieses mit konventionellen Methoden verarbeitbar sein.

Diese Aufgabe wird erfindungsgemäß durch die in den Patentansprüchen beschriebenen Gegenstände gelöst. Insbesondere haben die Erfinder der vorliegenden Erfindung überraschenderweise herausgefunden, dass die Beschichtung eines Glasfaservlieses mittels einer leitfähigen Beschichtung möglich ist und z.B. die Beheizung eines Raumes durch das beschichtete Glasfaservlies einfach möglich ist.

Insbesondere betrifft die vorliegende Erfindung in einem ersten Aspekt ein beheizbares Glasfaservlies, umfassend eine Beschichtung, die mindestens ein Leitfähigkeitsadditiv und mindestens ein Bindemittel umfasst, wobei das Flächengewicht des beheizbaren Glasfaservlieses mindestens 250 g/m² beträgt.

In einem zweiten Aspekt wird erfindungsgemäß ein Glasfaservliesbauteil bereitgestellt, umfassend das beheizbare Glasfaservlies gemäß der vorliegenden Erfindung und mindestens zwei elektrisch leitfähige Kontaktelemente, die an das beheizbare Glasfaservlies derart angeordnet sind, dass das beheizbare Glasfaservlies mit elektrischer Spannung und/oder elektrischem Strom beaufschlagbar ist.

In einem dritten Aspekt wird erfindungsgemäß ein Kit zum Herstellen eines Glasfaservliesbauteils bereitgestellt, wobei das Kit (1) ein beheizbares Glasfaservlies gemäß der vorliegenden Erfindung, (2) mindestens zwei elektrisch leitfähige Kontaktelemente und (3) optional, Glasgewebekleber, umfasst.

In einem vierten Aspekt wird erfindungsgemäß ein Gegenstand, ein Boden, eine Wand und/oder eine Decke, enthaltend ein beheizbares Glasfaservlies gemäß der vorliegenden Erfindung oder ein Glasfaservliesbauteil gemäß der vorliegenden Erfindung oder ein mittels des erfindungsgemäßen Kits hergestellten Glasfaservliesbauteils, bereitgestellt.

Ein einem fünften Aspekt wird erfindungsgemäß die Verwendung des beheizbaren Glasfaservlieses gemäß der vorliegenden Erfindung oder des Glasfaservliesbauteils gemäß der vorliegenden Erfindung oder eines mittels des Kits gemäß der vorliegenden Erfindung hergestellten Glasfaservliesbauteils zum Beheizen eines Gegenstand, eines Bodens und/oder Raumes oder zum Abschirmen eines Raumes vor elektromagnetischer Strahlung bereitgestellt.

In einem sechsten Aspekt wird erfindungsgemäß ein Verfahren zum Beheizen eines Gegenstand, eines Bodens und/oder eines Raumes bereitgestellt, umfassend die Schritte (i) Anbringen eines oder mehrerer beheizbaren/beheizbarer Glasfaservliese(s) gemäß der vorliegenden Erfindung oder eines oder mehrerer Glasfaservliesbauteils/Glasfaservliesbauteile gemäß der vorliegenden Erfindung an dem Gegenstand, dem Boden, eine oder mehrere Wand/Wände und/oder Decke(n), und (ii) Beaufschlagen des/der beheizbaren Glasfaservliese(s) oder des/der Glasfaservliesbauteils/Glasfaservliesbauteile mit elektrischer Spannung und/oder elektrischem Strom.

### Beheizbares Glasfaservlies

### Glasfaservlies

Ein in dem erfindungsgemäßen, beheizbaren Glasfaservlies enthaltene Komponente ist das Glasfaservlies vor Anbringung der Beschichtung, die mindestens ein Leitfähigkeitsadditiv und mindestens ein Bindemittel umfasst. Prinzipiell ist für das erfindungsgemäße, beheizbare Glasfaservlies jegliches für den Baubereich geeignete Glasfaservlies einsetzbar, sofern die Anbringung der Beschichtung, die mindestens ein Leitfähigkeitsadditiv und mindestens ein Bindemittel umfasst möglich ist.

Das Flächengewicht des Glasfaservlieses vor Anbringung der Beschichtung, die mindestens ein Leitfähigkeitsadditiv und mindestens ein Bindemittel umfasst, beträgt vorzugsweise nicht mehr als 240 g/m², mehr bevorzugt nicht mehr als 220 g/m², noch mehr bevorzugt nicht mehr als 210 g/m². Üblicherweise beträgt das Flächengewicht des Glasfaservlieses vor Anbringung der Beschichtung, die mindestens ein Leitfähigkeitsadditiv und mindestens ein Bindemittel umfasst, mindestens 140 g/m².

Das Glasfaservlies vor Anbringung der Beschichtung, die mindestens ein Leitfähigkeitsadditiv und mindestens ein Bindemittel umfasst, kann eine oder mehrere Beschichtung(en) aufweisen, die keine Leitfähigkeitsadditive umfasst(umfassen). Derlei Beschichtungen sind im Stand der Technik bekannt. Das o.g. Flächengewicht des Glasfaservlieses vor Anbringung der Beschichtung, die mindestens ein Leitfähigkeitsadditiv und mindestens ein Bindemittel umfasst, schließt (eine) derartige Beschichtung(en) ein.

Beispielsweise kann das beheizbare Glasfaservlies gemäß der vorliegenden Erfindung als Rollware ausgeführt sein, z.B. in üblichen Größen von bis zu 1000 m², wie 1 m x 500 m.

### Beschichtung, die mindestens ein Leitfähigkeitsadditiv und mindestens ein Bindemittel umfasst

Eine weitere in dem erfindungsgemäßen, beheizbaren Glasfaservlies enthaltene Komponente ist die Beschichtung, die mindestens ein Leitfähigkeitsadditiv und mindestens ein Bindemittel umfasst. Prinzipiell kann hier jede Beschichtung verwendet werden, die in der Lage ist, IR-Strahlung zu erzeugen, durch die ein Raum beheizt wird. Üblicherweise wird eine Beschichtung verwendet, die mindestens ein auf Kohlenstoff basierendes Leitfähigkeitsadditiv enthält, insbesondere eine Beschichtung, die mit einer Schutzkleinspannung betreibbar ist.

Die Beschichtung, die mindestens ein Leitfähigkeitsadditiv und mindestens ein Bindemittel umfasst, kann auf das Glasfaservlies in an sich bekannter Weise aufgebracht werden, beispielsweise mittels Foulardieren, Sprühen, Siebdruck (beispielsweise im Rotations- oder Flachbettverfahren), Rakeln mit Schlitzdüse und/oder Tauchbeschichtung.

Die Beschichtung, die mindestens ein Leitfähigkeitsadditiv und mindestens ein Bindemittel umfasst, kann auf beide Seiten des Glasfaservlieses oder nur auf einer Seite des beheizbaren Glasfaservlieses aufgebracht sein. Die Beschichtung, die mindestens ein Leitfähigkeitsadditiv und mindestens ein Bindemittel umfasst, dringt in das Glasfaservlies ein bzw. durchdringt dieses. Daher sind bei einer beidseitigen Beschichtung des Glasfaservlieses mit der Beschichtung, die mindestens ein Leitfähigkeitsadditiv und mindestens ein Bindemittel umfasst, die Beschichtungen auf beiden Seiten miteinander elektrisch leitend verbunden. Somit ist bei einer derartigen beidseitigen Beschichtung eine elektrische Kontaktierung (siehe unten) auf beliebigen Seiten des Glasfaservlieses möglich. Bei einer einseitigen Beschichtung des Glasfaservlieses mit der Beschichtung, die mindestens ein Leitfähigkeitsadditiv und mindestens ein Bindemittel umfasst, ist daher eine elektrische Kontaktierung (siehe unten) auch auf der der Beschichtung, die mindestens ein Leitfähigkeitsadditiv und mindestens ein Bindemittel umfasst, abgewandten Seite möglich. Üblicherweise ist die Beschichtung, die mindestens ein Leitfähigkeitsadditiv und mindestens ein Bindemittel umfasst, nur auf einer Seite des beheizbaren Glasfaservlieses aufgebracht.

Auf dem beheizbaren Glasfaservlies umfassend eine Beschichtung, die mindestens ein Leitfähigkeitsadditiv und mindestens ein Bindemittel umfasst, können eine oder mehrere weitere Schichten (wie eine Schutzschicht (z.B. ein Schutzlack, Sperrgrund, Haftgrund und/oder eine Farbschicht) aufgebracht sein. Die Schutzschicht kann in einer Ausführungsform die Beschichtung, die mindestens ein Leitfähigkeitsadditiv und mindestens ein Bindemittel umfasst, elektrisch isolieren. Vorteilhafterweise ist die Schutzschicht thermisch leitend, gegebenenfalls auch elektrisch isolierend. Die Schutzschicht kann in an sich bekannter Weise erzeugt werden. Beispiele für eine solche Schutzschicht ist ein Sperrgrund. Ein derartiger Sperrgrund kann zur chemischen Entkopplung der Beschichtung, die mindestens ein Leitfähigkeitsadditiv und mindestens ein Bindemittel umfasst und von der Deckbeschichtung, sofern vorhanden, führen. Weiterhin kann eine Farbschicht als oberste Schicht aufgetragen werden oder sein, die vorteilhafterweise thermisch leitend ist. In einer weiteren Ausführungsform kann eine Vliesschicht auf dem erfindungsgemäßen Glasfaservlies aufgebracht sein, wobei diese Vliesschicht, sofern vorhanden, normalerweise kein Leitfähigkeitsadditiv enthält. Eine derartige Vliesschicht, falls vorhanden, weist vorzugsweise ein Flächengewicht von nicht mehr als 100 g/m², mehr bevorzugt nicht mehr als 60 g/m² und noch mehr bevorzugt nicht mehr als 30 g/m² auf. Diese Vliesschicht, falls vorhanden, kann ein Kunststoff- und/oder ein Glasfaservlies aufweisen bzw. daraus bestehen, beispielsweise ein Glasfaservlies aufweisen bzw. daraus bestehen. Falls derartige Schichten vorhanden sind, befinden sie sich üblicherweise nur auf einer Seite des Glasfaservlieses. Ansonsten ist die elektrische Kontaktierung unter Umständen schwierig.

Das Leitfähigkeitsadditiv, das in der vorstehend genannten Beschichtung enthalten ist, die zur Herstellung des erfindungsgemäßen Glasfaservlieses verwendet wird, ist vorzugsweise ein kohlenstoffbasiertes Leitfähigkeitsadditiv. In der vorliegenden Erfindung werden als kohlenstoffbasierte Leitfähigkeitsadditive Leitfähigkeitsadditive angesehen, die elementaren Kohlenstoff enthalten. Beispielsweise werden Carbid-haltige Verbindungen in der vorliegenden Erfindung nicht als kohlenstoffbasierte Leitfähigkeitsadditive angesehen.

Die erfindungsgemäß verwendete Beschichtung, die mindestens ein Leitfähigkeitsadditiv und mindestens ein Bindemittel umfasst, umfasst vorzugsweise mindestens ein Leitfähigkeitsadditiv, ausgewählt aus Leitfähigkeitsadditiven, die Graphit, Graphen und Ruß umfassen, und mindestens ein Bindemittel, umfassend ein elektrisch nicht leitfähiges Polymer und/oder ein anorganisches Bindemittel. Mehr bevorzugt umfasst die Beschichtung, die mindestens ein Leitfähigkeitsadditiv und mindestens ein Bindemittel umfasst, mindestens zwei Leitfähigkeitsadditive, ausgewählt aus Leitfähigkeitsadditiven, die Graphit, Graphen und Ruß umfassen, und mindestens ein Bindemittel, umfassend ein elektrisch nicht leitfähiges Polymer und/oder ein anorganisches Bindemittel.

In der bevorzugten Ausführungsform, in der die Beschichtung, die mindestens ein kohlenstoffbasiertes Leitfähigkeitsadditiv, vorzugsweise ausgewählt aus Leitfähigkeitsadditiven, die Graphit, Graphen und Ruß umfassen, enthält, und mindestens ein Bindemittel umfasst, wobei das Bindemittel ein elektrisch nicht leitfähiges Polymer und/oder ein anorganisches Bindemittel umfasst, ist die Beschichtung, die mindestens ein auf Kohlenstoff basierendes Leitfähigkeitsadditiv und mindestens ein Bindemittel umfasst, aufgrund des Vorhandenseins des einen oder der mehreren Leitfähigkeitsadditive niederohmig, was zu einer guten elektrischen Leitfähigkeit führt, da nur ein geringer elektrischer Widerstand vorhanden ist. Dadurch kann eine homogene Beheizbarkeit realisiert werden. Durch die Niederohmigkeit ist zudem gewährleistet, dass an die Beschichtung, die mindestens ein Leitfähigkeitsadditiv und mindestens ein Bindemittel umfasst, nur geringe Spannungen und/oder geringe Ströme angelegt werden müssen, um eine gute Beheizung zu erreichen.

Leitfähigkeitsadditive, insbesondere kohlenstoffbasierte Leitfähigkeitsadditive, sind elektrisch leitende Materialien und sind dem Fachmann bekannt. Spezifische Beispiele für auf Kohlenstoff basierende Leitfähigkeitsadditive beinhalten Graphit, Ruß, Graphen, Kohlenstoff-Nanotubes (CNTs), Carbonfasern und Kohlenstoff-Nanofasem.

Die Eigenschaften der vorstehend genannten Leitfähigkeitsadditive werden im Folgenden genauer erläutert.

Graphit ist ein sehr häufig vorkommendes Mineral und gehört zur Ordnung der Halbmetalle und Nichtmetalle. Er ist neben Diamant und Fullerenen die dritte unter irdischen Normalbedingungen stabile Form (Modifikation) des Kohlenstoffs und kristallisiert meist im hexagonalen, sehr selten auch im trigonalen Kristallsystem.

Graphit entwickelt undurchsichtige, graue bis schwarze Kristalle in sechseckiger, tafeliger, schuppiger oder stengeliger Form, die auf den Kristallflächen Metallglanz aufweisen.

Im kristallinen Graphit liegen parallel verlaufende ebene Schichten, die "Basalebenen" oder "GraphenSchichten", vor. Eine Schicht besteht aus kovalent verknüpften Sechsecken, deren Kohlenstoffatome sp²-hybridisiert sind. Innerhalb dieser Ebenen beträgt die Bindungsenergie zwischen den Kohlenstoffatomen 4,3 eV, zwischen ihnen dagegen lediglich 0,07 eV. Aus dieser extremen Richtungsabhängigkeit der Bindungskräfte resultiert eine deutliche Anisotropie der mechanischen, elektrischen und thermischen Eigenschaften des Graphits:
- leichte Spaltbarkeit des reinen Graphits entlang der Basalebenen, deutlich höhere Festigkeit entlang der Kristallschichten;
- thermische und elektrische Isolation orthogonal zu den Basalebenen gegenüber einer fast metallischen Leitfähigkeit entlang der Ebenen.

Die Leitfähigkeit innerhalb einer Ebene wird durch die Delokalisation der π-Elektronen ermöglicht. Weisen die Ebenen keine feste Korrelation zueinander auf, spricht man von turbostratischem Kohlenstoff. Graphit kann auch synthetischen Ursprungs sein, als Produkt der Verkokung von dafür geeigneten Kunststoffen, Pech, Erdöl, Kohle und dergleichen.

Graphen besteht, wie oben bereits erwähnt, aus einer einzelnen Schicht, bestehend aus kovalent verknüpften Sechsecken von Kohlenstoffatomen, wobei diese Kohlenstoffatome sp²-hybridisiert sind. Im Gegensatz zum Graphit liegt eine einzelne Schicht isoliert vor, besteht also nicht aus parallel verlaufenden Schichten. Graphen ist folglich eine Modifikation des Kohlenstoffs mit zweidimensionaler Struktur. Graphen ist in Schichtrichtung extrem steif, da die Bindung zwischen zwei benachbarten sp²-hybridisierten Kohlenstoffatomen von der Stärke her mit der Bindung zwischen zwei sp³-hybridisierten Kohlenstoffatomen innerhalb eines Diamantgitters vergleichbar ist. Graphen kann mittels einer Vielzahl von synthetischen Methoden hergestellt werden.

Ruß ist ein schwarzer, pulverförmiger Feststoff, der je nach Qualität und Verwendung zu 80% oder mehr aus Kohlenstoff besteht.

Je nach ihrem Anwendungsgebiet besitzen Ruße spezielle Eigenschaftsprofile, die durch die Art des Herstellverfahrens und durch Variation der Prozessparameter gezielt beeinflusst werden.

Ruße, ihre Eigenschaften, Herstellungsverfahren, Verwendungen und so weiter sind bereits weitreichend beschrieben, so dass an dieser Stelle auf die einschlägige Fachliteratur verwiesen wird.

Kohlenstoff-Nanotubes (CNTs) bestehen aus zum Zylinder aufgerollten, geschlossen Graphen-Schichten. Einzelne Röhren nennt man "single wall carbon nanotubes" (SWCNT), Teilchen aus konzentrisch gestapelten Röhren aufsteigenden Durchmessers werden "multiwall carbon nanotubes" (MWCNT) genannt.

CNTs kann man über verschiedene Methoden herstellen. Am bekanntesten sind der Lichtbogenprozess, das Laserablationsverfahren und die katalytisch unterstützte Gasphasenabscheidung (CCVD). Letzteres Verfahren eignet sich zur großtechnischen Produktion von CNTs. Hierbei entstehen die CNT aus gasförmigen Kohlenstofflieferanten (Kohlenwasserstoffe, Alkohole, CO, CO₂) auf metallischen, katalytisch aktiven Substanzen.

Typischerweise weisen SWCNT einen Durchmesser von 0,5 - 4 nm, MWCNT einen Durchmesser zwischen 6 und 100 nm auf. Die Länge von CNTs kann bis zu einigen mm betragen.

Die physikalischen Eigenschaften von CNTs entsprechen weitestgehend jenen des Graphits entlang der Basalebenen.

CNTs werden heute als mechanische Verstärkung, elektrisch und thermisch leitfähiges Additiv in Polymeren, Keramiken und Metallen eingesetzt. Dazu werden die CNTs oft an ihrer Oberfläche chemisch modifiziert, um den Anforderungen einer guten Dispergierbarkeit und Anbindung an die Matrix zu genügen. In der Regel werden die CNTs dem Matrixmaterial zugegeben. Somit soll der Begriff "CNTs" sowohl unmodifizierte als auch modifizierte (insbesondere seitenwandmodifizierte) CNTs umfassen. Aufgrund des hohen Aspektverhältnisses und der hohen spezifischen Oberfläche der CNTs sind nur Komposite mit verhältnismäßig niedrigem CNT-Gehalt darstellbar.

Carbonfasern (auch Kohlenstofffasern genannt) sind industriell hergestellte Fasern. Man unterscheidet isotrope und anisotrope Typen, wobei isotrope Fasern nur geringe Festigkeiten aufweisen und sich anisotrope Fasern durch hohe Festigkeiten und Steifigkeiten bei gleichzeitig geringer Bruchdehnung in axialer Richtung auszeichnen. Der Durchmesser einer Carbonfaser beträgt etwa 5 bis 9 µm und ist somit größer als der von Kohlenstoff-Nanofasern oder CNTs.

Kohlenstoff-Nanofasern (CNF) bestehen aus Graphenschichten, die entlang der Filamentachse aufeinander gestapelt sind. Der Winkel (die Orientierung) der Graphenebenen bezüglich der Filamentachse wird zur groben Unterscheidung herangezogen. Sogenannte 'Herringbone' CNF besitzen demnach Graphenebenen die in einem Winkel # 90° angeordnet sind. Diese CNF können massiv oder auch hohl sein. Ihre Durchmesser liegen im Bereich 50 nm - 1 µm und ihre Längen können bis zu mm betragen. Im Falle, dass die Graphenschichten in einen Winkel = 90° zur Filamentachse angeordnet sind spricht man von 'Platelet' CNF. Ihre Durchmesser liegen im Bereich von 50 bis 500 nm und ihre Längen können bis zu 50 µm betragen.

Diese CNF werden in der Regel über CVD hergestellt. Ihre Anwendungen finden sich vornehmlich in der Katalyse als Katalysatorträger und als aktive Zusatzstoffe in Li-Ionen-Batterien oder bei der Gasspeicherung.

Kohlenstoff-Nanotubes, Carbonfasern und Kohlenstoff-Nanofasern weisen aufgrund ihrer hohen Neigung zur Selbstaggregation die Nachteile auf, dass sie nur schwer und unter hohem technischem Aufwand in Dispersionen überführt werden können und dass die dispergierten Fasern stark dazu neigen, wieder zu aggregieren. Das führt dazu, dass einerseits die Herstellungskosten von Dispersionen faseriger Leitfähigkeitsadditive sehr hoch sind und anderseits solche Dispersionen eine geringe Lagerstabilität aufweisen. Um diese Nachteile zu vermeiden, ist die erfindungsgemäße Beschichtung, die mindestens ein Leitfähigkeitsadditiv und mindestens ein Bindemittel umfasst, vorzugsweise frei von elektrisch leitfähigen Carbonfasern und Kohlenstoff-Nanotubes, insbesondere frei von elektrisch leitfähigen Carbonfasern, Kohlenstoff-Nanofasern und Kohlenstoff-Nanotubes.

Der Gewichtsanteil des mindestens einen Leitfähigkeitsadditivs, bezogen auf das Gesamtgewicht der Beschichtung, die mindestens ein Leitfähigkeitsadditiv und mindestens ein Bindemittel umfasst, beträgt vorzugsweise 10 bis 90 Gew.%, mehr bevorzugt 20 bis 80 Gew.% und noch mehr bevorzugt 30 bis 70 Gew.%.

In der Beschichtung, die mindestens ein Leitfähigkeitsadditiv und mindestens ein Bindemittel umfasst, kann vorzugsweise mindestens ein Bindemittel enthalten sein, welches ein elektrisch nicht leitfähiges Polymer umfasst. Unter "Bindemittel" wird erfindungsgemäß eine Verbindung verstanden, durch die Partikel (z.B. Leitfähigkeitsadditive, wie beispielsweise Graphit, Graphen und/oder Ruß) auf einem Substrat, z.B. dem Glasfaservlies des erfindungsgemäßen beheizbaren Glasfaservlieses oder evtl. vorhandener Beschichtung(en), die keine Leitfähigkeitsadditive umfasst/umfassen, derart aufbringbar sind, dass die Partikel zusammen mit dem Bindemittel (und gegebenenfalls mit weiteren Substanzen) auf einem Substrat, z.B. dem Glasfaservlies des erfindungsgemäßen beheizbaren Glasfaservlieses oder evtl. vorhandener Beschichtung(en), die keine Leitfähigkeitsadditive umfasst/umfassen, haften. Das Bindemittel fördert also die Kohäsion der Partikel in der Beschichtung, die mindestens ein Leitfähigkeitsadditiv und mindestens ein Bindemittel umfasst, und die Adhäsion der beheizbaren Schicht an dem Substrat, z.B. dem Glasfaservlies des erfindungsgemäßen beheizbaren Glasfaservlieses oder evtl. vorhandener Beschichtung(en), die keine Leitfähigkeitsadditive umfasst/umfassen. Bindemittel können organisch oder anorganisch ausgebildet sein.

In ähnlicher Weise kann die Dispersion, die mindestens ein Leitfähigkeitsadditiv, ausgewählt aus Leitfähigkeitsadditiven, die Graphit, Graphen und Ruß umfassen, enthält und zur Erzeugung einer Beschichtung, die mindestens ein Leitfähigkeitsadditiv und mindestens ein Bindemittel umfasst, und die mindestens ein Leitfähigkeitsadditiv, ausgewählt aus Leitfähigkeitsadditiven, die Graphit, Graphen und Ruß umfassen, enthält, verwendbar ist, mindestens ein wie vorstehend definiertes Bindemittel enthalten.

Das elektrisch nicht leitfähige Polymer ist nicht besonders begrenzt und beinhaltet verschiedene Arten von Polymeren, insbesondere thermoplastische Polymere (auch Thermoplaste genannt), Elastomere und Reaktivharze, gegebenenfalls im Gemisch mit einem oder mehreren Zusatzstoffen (wie Härtern und Beschleunigern). Unter Polymeren versteht man chemische Verbindungen, die aus einer oder wenigen Sorten von gleichartigen Einheiten (Monomeren) aufgebaut sind. Solche Moleküle sind meist kettenartig oder verzweigt aufgebaut und weisen kovalente Bindungen zwischen den Monomeren auf. Nachfolgend werden einige, jedoch nicht ausschließliche Beispiele für bevorzugte Polymere beschrieben, die jeweils einzeln, oder aber in jeder beliebigen Kombination zum Einsatz kommen können. Der Anteil des nicht elektrisch leitfähigen Polymers in der Beschichtung, die mindestens ein Leitfähigkeitsadditiv und mindestens ein Bindemittel umfasst, kann 10 bis 90% (beispielsweise 20 bis 80%, 30 bis 70%) nach Gewicht betragen. Gleichfalls kann der Anteil des nicht elektrisch leitfähigen Polymers in der Dispersion, die zur Erzeugung einer Beschichtung, die mindestens ein Leitfähigkeitsadditiv ausgewählt aus Leitfähigkeitsadditiven, die Graphit, Graphen und Ruß umfassen, und mindestens ein Bindemittel umfasst, verwendbar ist, 10 bis 90% (beispielsweise 20 bis 80%, 30 bis 75% oder 40 bis 60%) nach Gewicht betragen.

Beispielhafte Gruppen von thermoplastischen Polymeren umfassen die folgenden:
- Polyolefine (wie Polypropylen, Polyethylen, Polybutylen, Polyisobutylen, etc.)
- Polyamide (wie z.B. Polyamid-66, Polyamid-12, Polyamid-11, Polyamid-6, etc.)
- Polyacryl-Polymere (wie Polymethylmethacrylat, Polyacrylnitril, Polyacrylsäure und Derivate, etc.)
- Fluorpolymere (wie Polytetraflourethylen, Polyvinylidenfluorid, etc.)
- aliphatische und aromatische Polyester (wie z.B. Polyglykole, Polyethylenterephthalat, etc.)
- Polyimide (wie z.B. Polyetherimid)
- Poly(aryl)etherketone (wie z.B. Polyetherketone, Polyetheretherketone, etc.)
- Polysulfide (wie z.B. Polyphenylensulfid, Polyphenylensulfon, Polysulfon, Polyethersulfon, etc.)
- Polyacetale
- Cellulose und Derivate davon (wie z.B. Cellulosenitrate, -acetate, -acetatbutyrate, etc.)
- Vinylpolymere (wie z.B. Polyvinylchlorid, Polyvinylacetat, Polyvinylalkohol, Polyvinylbutyral, Polyvinylpyrrolidon, etc.)

Beispielhafte Gruppen von Elastomeren umfassen die folgenden:
- Naturkautschuke, die Chlor-, Styrol-, Nitril-, Schwefel- oder Sauerstoffsubstituenten enthalten können
- Isoprenkautschuke, die Chlor-, Styrol-, Nitril-, Schwefel- oder Sauerstoffsubstituenten enthalten können
- Butadienkautschuke, die Chlor-, Styrol-, Nitril-, Schwefel- oder Sauerstoffsubstituenten enthalten können
- andere Kautschuke, die Chlor-, Styrol-, Nitril-, Schwefel- oder Sauerstoffsubstituenten enthalten können
- Silikonelastomere
- Polyurethane

Ein Beispiel für Reaktivharze ist ein Epoxydharz, das epoxygruppenhaltige Monomere, Oligomere und/oder Polymere enthält. Epoxydharze können auf aromatischen Monomeren (z.B. auf Bisphenol-A, -F, Novolak und andere), aliphatischen Monomeren oder cycloaliphatischen Monomeren basieren. Beispiele für die letztere Gruppe beinhalten in nicht begrenzender Weise 3,4-Epoxycyclohexylmethyl-3,4-epoxycyclohexancarboxylat, Bis((3,4-epoxy-cyclohexyl)methyl)adipat und andere Derivate höheren oder auch niedrigeren Molekulargewichts. Die Epoxydharze können mono-, di-, tri-, tetra- und mehrfunktionell sein und umfassen alle Molekulargewichte.

Weitere Gruppen für Reaktivharze stellen Cyanatester und Isocyanate dar und einzelne Vertreter hiervon umfassen in nicht begrenzender Weise 2,4-Diisocyanato-1-methyl-benzol, 1-Isocyanato-4-[(4-isocyanatophenyl)methyl]benzol, 1,1-Bis(4-cyanatophenyl)ethan, 2,2-Bis(4-cyanatophenyl)propan, Oligo(3-methylen-1,5-phenylencyanat) und andere Derivate höheren oder auch niedrigeren Molekulargewichts.

Eine weitere Gruppe für Reaktivharze ist die Gruppe von linearen und verzweigten Diolen und mehrfunktionellen Alkoholen, wie Oligo- und Polyester-Polyole und Polyether-Polyole.

Eine weitere Gruppe für Reaktivharze ist die Gruppe von reaktiven Polyimidsystemen. Reaktive Polyimidsysteme können monofunktionelle Monomere (wie z.B. N-Phenylmaleimid, 2,6-Xylylmaleimid, N-Cyclohexylmaleimid, etc.) und/oder difunktionelle Monomere (wie z.B. 4,4'-Diphenylmethanbismaleimid, N,N'-(4-Methyl-m-phenylen)bismaleimid, N,N'-m-Phenylenbismaleimid, Bisphenol-A Diallylether, o,o'-Diallylbisphenol-A, Polyphenylmethanbismaleimid, Polybenzimidazol, etc.) enthalten.

Eine weitere Gruppe für Reaktivharze ist die Gruppe von Phenolharzen. Beispiele umfassen in nicht begrenzender Weise diejenigen, die auf Novolak oder Resol basieren.

Weitere beispielhafte Gruppen für Reaktivharze umfassen die folgenden:
- ungesättigte Polyester- und Vinylesterharze
- Alkydharze
- Melaminharze
- Polysilane und Silikone
- Acrylate (einschließlich Methacrylate)
- Polychinoxaline
- Peche und Bitumen

Weiterhin können Härter und/oder Beschleuniger, wie Amine, Amide, Amidoamine, Aminoalkohole, Aminosäuren, Anhydride, Imidazole, Cyanamide, Alkohole, Phenole, Polyole, Cyanate, Mercaptane, Carbonsäuren, Metallkomplexe etc., in der Beschichtung, die mindestens ein Leitfähigkeitsadditiv und mindestens ein Bindemittel umfasst, (z.B. die Dispersion die mindestens ein Leitfähigkeitsadditiv, ausgewählt aus Leitfähigkeitsadditiven, die Graphit, Graphen und Ruß umfassen, enthält, und die zur Erzeugung einer Beschichtung, die mindestens ein Leitfähigkeitsadditiv, ausgewählt aus Leitfähigkeitsadditiven, die Graphit, Graphen und Ruß umfassen, und mindestens ein Bindemittel umfasst, enthält, verwendbar ist) enthalten sein. Unter "Härter" wird erfindungsgemäß eine Verbindung verstanden, durch die eine Vielzahl einzelner Grundbausteine (z.B. eines Bindemittels) zu einem dreidimensionalen Netzwerk verknüpft wird. Der Härter weist vorzugsweise mindestens zwei funktionelle Gruppen auf, die fähig sind, mit einem Bindemittel zu reagieren, und gleich oder verschieden sein können. Der Anteil des Härters/Beschleunigers in der Beschichtung, die mindestens ein Leitfähigkeitsadditiv und mindestens ein Bindemittel umfasst, z.B. in der Dispersion) ist vorzugsweise stöchiometrisch mit Bezug auf das jeweilige Reaktivharz (d.h. der Härter/Beschleuniger liegt in einer solchen Menge vor, dass theoretisch nahezu jedes Härter/Beschleuniger-Molekül mit einem Reaktivharz-Molekül reagieren kann; vorzugsweise beträgt die Menge an Härter/Beschleuniger 80 bis 150% (wie 85 bis 130%, 90 bis 120%, 95 bis 110%, 97 bis 105%, 98 bis 102% oder 100%) bezogen auf die molare Menge des Reaktivharzes in der Beschichtung, die mindestens ein Leitfähigkeitsadditiv und mindestens ein Bindemittel umfasst, (bzw. in der Dispersion).

Es kann bevorzugt sein, dass die Beschichtung, die mindestens ein Leitfähigkeitsadditiv und mindestens ein Bindemittel umfasst, (z.B. die Dispersion die mindestens ein Leitfähigkeitsadditiv, ausgewählt aus Leitfähigkeitsadditiven, die Graphit, Graphen und Ruß umfassen, enthält, und die zur Erzeugung einer Beschichtung, die mindestens ein Leitfähigkeitsadditiv, ausgewählt aus Leitfähigkeitsadditiven, die Graphit, Graphen und Ruß umfassen, und mindestens ein Bindemittel umfasst, enthält, verwendbar ist) keine organischen Bindemittel enthält. In diesem Fall kann die Beschichtung, die mindestens ein Leitfähigkeitsadditiv und mindestens ein Bindemittel umfasst, (bzw. die Dispersion) anstatt des elektrisch nicht leitfähigen Polymers ein oder mehrere anorganische Bindemittel umfassen. Der Begriff "anorganisches Bindemittel" betrifft erfindungsgemäß einen mineralischen Stoff, der beim Mischen mit Wasser eine insbesondere verarbeitbare Paste ergibt, die anschließend erhärtet bzw. erhärtbar ist. Vorzugsweise ist das anorganische Bindemittel im festen und/oder erhärteten Zustand elektrisch nicht leitfähig. Die Erhärtung kann hydraulisch (d.h. mit und unter Wasser; Beispiel: Zement, Magnesiabinder), carbonatisch (Beispiel: Kalk), hydratisch (Beispiel: Gips) oder anderweitig (z.B. polymerisch; Beispiel: Wasserglas) oder gemischt erfolgen. Beispiele für anorganische Bindemittel beinhalten in nicht begrenzender Weise Zement (wie Portlandzement, Tonerdezement (Calciumaluminate), Portlandschnellzement (Calciumsilicate, Anhydrit (CaSO4)), Calciumsulfoaluminatzement (Ye'elimit, Belit, Anhydrit), Sulfathüttenzement (Hüttensand, Anhydrit, Calciumsilicate)), Kalk (wie Brandkalk (CaO) oder gelöschter Kalk (Ca(OH)₂)), Gips (wie Anhydrit (CaSO4), Halbhydrat (CaSO₄·0,5 H₂O) oder Dihydrat (CaSO₄·2 H₂O)), Magnesiabinder (Magnesia, Magnesiumsalze), Wasserglas (Alkalisilicate, insbesondere Natron- und/oder Kalisilicate) und Geopolymere (z.B. Alumosilicate wie Tone). Bevorzugte Beispiele für anorganische Bindemittel sind gebrannter Kalk, gelöschter Kalk, Wasserglas, Gips, Ton und Zement. Der Anteil des anorganischen Bindemittels in der Beschichtung, die mindestens ein Leitfähigkeitsadditiv und mindestens ein Bindemittel umfasst, kann 10 bis 90% (beispielsweise 20 bis 80%, 30 bis 70%) nach Gewicht betragen. Gleichfalls kann der Anteil des anorganischen Bindemittels in der Dispersion die mindestens ein Leitfähigkeitsadditiv, ausgewählt aus Leitfähigkeitsadditiven, die Graphit, Graphen und Ruß umfassen, enthält, und zur Erzeugung einer Beschichtung, die mindestens ein Leitfähigkeitsadditiv und mindestens ein Bindemittel umfasst, verwendbar ist, 10 bis 90% (beispielsweise 20 bis 80%, 30 bis 75% oder 40 bis 60%) nach Gewicht betragen.

Das Flächengewicht des beheizbaren Glasfaservlieses gemäß der vorliegenden Erfindung beträgt mindestens 250 g/m², vorzugsweise mindestens 275 g/m², mehr bevorzugt mindestens 300 g/m², noch mehr bevorzugt mindestens 325 g/m². Üblicherweise beträgt das Flächengewicht des beheizbaren Glasfaservlieses 600 g/m² oder weniger. Diese Flächengewichte beziehen sich auf die Summe aus dem Glasfaservlies vor Anbringung der Beschichtung, die mindestens ein Leitfähigkeitsadditiv und mindestens ein Bindemittel umfasst, und der auf diesem Glasfaservlies befindlichen Beschichtung, die mindestens ein Leitfähigkeitsadditiv und mindestens ein Bindemittel umfasst.

Das Flächengewicht (auch "flächenbezogene Masse" genannt) eines Glasfaservlieses wird in der vorliegenden Erfindung gemäß DIN EN 29073-1-1992 bestimmt.

Der Gewichtsanteil der Beschichtung, die mindestens ein Leitfähigkeitsadditiv und mindestens ein Bindemittel umfasst, des beheizbaren Glasfaservlieses gemäß der vorliegenden Erfindung beträgt vorzugsweise mindestens 30%, mehr bevorzugt mindestens 35%, noch mehr bevorzugt mindestens 40%, bezogen auf die Summe der Gewichte des Bereiches des Glasfaservlieses, welcher mit der Beschichtung, die mindestens ein Leitfähigkeitsadditiv und mindestens ein Bindemittel umfasst, beschichtet ist, vor Auftragung der Beschichtung, die mindestens ein Leitfähigkeitsadditiv und mindestens ein Bindemittel umfasst, und der Beschichtung, die mindestens ein Leitfähigkeitsadditiv und mindestens ein Bindemittel umfasst. Üblicherweise beträgt der Gewichtsanteil der Beschichtung, die mindestens ein Leitfähigkeitsadditiv und mindestens ein Bindemittel umfasst, des beheizbaren Glasfaservlieses gemäß der vorliegenden Erfindung nicht mehr als 65%, bezogen auf die Summe der Gewichte des Bereiches des Glasfaservlieses, welcher mit der Beschichtung, die mindestens ein Leitfähigkeitsadditiv und mindestens ein Bindemittel umfasst, beschichtet ist, vor Auftragung der Beschichtung, die mindestens ein Leitfähigkeitsadditiv und mindestens ein Bindemittel umfasst, und der Beschichtung, die mindestens ein Leitfähigkeitsadditiv und mindestens ein Bindemittel umfasst. Wie weiter unten detailliert ausgeführt, kann das beheizbare Glasfaservlies nur teilweise mit der Beschichtung, die mindestens ein Leitfähigkeitsadditiv und mindestens ein Bindemittel umfasst, beschichtet sein. Daher wurde der Gewichtsanteil der Beschichtung, die mindestens ein Leitfähigkeitsadditiv und mindestens ein Bindemittel umfasst, nur auf die beschichteten Bereiche bezogen.

Falls das beheizbare Glasfaservlies gemäß der vorliegenden Erfindung nur teilweise mit der Beschichtung, die mindestens ein Leitfähigkeitsadditiv und mindestens ein Bindemittel umfasst, beschichtet ist, kann das beheizbare Glasfaservlies gemäß der vorliegenden Erfindung einen oder mehrere voneinander getrennte Bereiche, welche(r) mit der Beschichtung, die mindestens ein Leitfähigkeitsadditiv und mindestens ein Bindemittel umfasst, beschichtet ist/sind, aufweisen. Beispielsweise können die voneinander getrennten Bereiche, welche mit der Beschichtung, die mindestens ein Leitfähigkeitsadditiv und mindestens ein Bindemittel umfasst, beschichtet sind, in einer 2 x n-Anordnung oder in einer 1 x n-Anordnung auf das beheizbare Glasfaservlies gemäß der vorliegenden Erfindung aufgetragen sein, wobei n eine positive ganze Zahl von bis zu 500, wie bis zu 250 oder bis zu 200 ist (insbesondere falls das beheizbare Glasfaservlies als Rollware ausgeführt ist, kann n eine positive ganze Zahl von bis zu 500, wie bis zu 250 oder bis zu 200 sein).

Der Einfachheit halber werden in der vorliegenden Erfindung die Begriffe "Bereich", "Bereiche" oder "Bereich(e)" für den einen oder die mehreren voneinander getrennte Bereich(e), welche(r) mit der Beschichtung, die mindestens ein Leitfähigkeitsadditiv und mindestens ein Bindemittel umfasst, beschichtet ist/sind, verwendet.

Üblicherweise sind diese Bereiche ungefähr gleich groß, d.h. das Verhältnis der Fläche des größten Bereiches zu der Fläche des kleinsten Bereiches ist üblicherweise kleiner als 1,1, vorzugsweise kleiner als 1,05. In einer bevorzugten Ausführungsform sind alle Bereiche gleich groß.

Die Dicke des beheizbaren Glasfaservlieses gemäß der vorliegenden Erfindung beträgt vorzugsweise zwischen 0,20 und 1,00 mm, mehr bevorzugt zwischen 0,25 und 0,90 mm, noch mehr bevorzugt zwischen 0,30 und 0,80 mm. In einer Ausführungsform beträgt die Dicke des beheizbaren Glasfaservlieses zwischen 0,30 und 0,50 mm. Diese Ausführungsform ist insbesondere zur Abbringungen an Gegenstände, Wände und/oder Decken geeignet.

Die Dicke des Glasfaservlieses eines Glasfaservlieses wird in der vorliegenden Erfindung gemäß DIN EN ISO 9073-2:1997 bestimmt.

Die Höchstzugkraft des beheizbaren Glasfaservlieses gemäß der vorliegenden Erfindung in Längs- und/oder Querrichtung beträgt vorzugsweise mindestens 120 N/5 cm, mehr bevorzugt beträgt die Höchstzugkraft des beheizbaren Glasfaservlieses in Längs- und/oder Querrichtung mindestens 135 N/5 cm, noch mehr bevorzugt beträgt die Höchstzugkraft des beheizbaren Glasfaservlieses
- in Längsrichtung mindestens 160 N/5 cm und/oder
- in Querrichtung mindestens 135 N/5 cm,
mehr bevorzugt beträgt die Höchstzugkraft des beheizbaren Glasfaservlieses
- in Längsrichtung mindestens 175 N/5 cm und/oder
- in Querrichtung mindestens 145 N/5 cm.

Die Höchstzugkraft des Glasfaservlieses in Längs- und Querrichtung wird durch die Auftragung der Beschichtung, die mindestens ein Leitfähigkeitsadditiv und mindestens ein Bindemittel umfasst, üblicherweise nicht bzw. nicht wesentlich beeinträchtigt, sondern kann sogar erhöht werden.

Beispielsweise beträgt die die Höchstzugkraft des beheizbaren Glasfaservlieses
- in Längsrichtung mindestens 210 N/5 cm und/oder
- in Querrichtung mindestens 175 N/5 cm.

Die Höchstzugkraft des Glasfaservlieses vor Auftragung der Beschichtung, die mindestens ein Leitfähigkeitsadditiv und mindestens ein Bindemittel umfasst, in Längs- und/oder Querrichtung beträgt vorzugsweise mindestens 120 N/5 cm, mehr bevorzugt beträgt die Höchstzugkraft des Glasfaservlieses vor Auftragung der Beschichtung, die mindestens ein Leitfähigkeitsadditiv und mindestens ein Bindemittel umfasst, in Längs- und/oder Querrichtung mindestens 135 N/5 cm, noch mehr bevorzugt beträgt die Höchstzugkraft des Glasfaservlieses vor Auftragung der Beschichtung, die mindestens ein Leitfähigkeitsadditiv und mindestens ein Bindemittel umfasst,
- in Längsrichtung mindestens 160 N/5 cm und/oder
- in Querrichtung mindestens 135 N/5 cm,
mehr bevorzugt beträgt die Höchstzugkraft des Glasfaservlieses vor Auftragung der Beschichtung, die mindestens ein Leitfähigkeitsadditiv und mindestens ein Bindemittel umfasst,
- in Längsrichtung mindestens 175 N/5 cm und/oder
- in Querrichtung mindestens 145 N/5 cm.

Die Höchstzugkraft eines Glasfaservlieses in Längs- und Querrichtung wird in der vorliegenden Erfindung gemäß DIN EN ISO 29073-3:1992 bestimmt.

Das erfindungsgemäße Glasfaservlies kann eine Perforation und/oder Lochung aufweisen. Hierdurch wird beispielsweise die blasenfreie Anbringung des erfindungsgemäßen Glasfaservlieses erleichtert. Zudem kann sich Feuchtigkeit, die sich unterhalb des erfindungsgemäßen Glasfaservlieses befindet, leichter verflüchtigen. Da lediglich ein Gasdurchtritt erleichtert wird, können die einzelnen Löcher der Perforation und/oder Lochung klein gehalten werden, um die Funktionsweise des erfindungsgemäßen Glasfaservlieses nicht oder nur unwesentlich zu beeinträchtigen. Eine Perforation oder Lochung kann unter Umständen jedoch zu einer Verringerung der Höchstzugkraft führen. Die zuvor genannten Werte für die Höchstzugkraft betreffen daher normalerweise nur ein Glasfaservlies vor Auftragung der Beschichtung, die mindestens ein Leitfähigkeitsadditiv und mindestens ein Bindemittel umfasst bzw. ein beheizbares Glasfaservlies gemäß der vorliegenden Erfindung, welches (noch) keine Perforation und/oder Lochung aufweist. Da eine Perforation und/oder Lochung üblicherweise nach Anbringung der Beschichtung, die mindestens ein Leitfähigkeitsadditiv und mindestens ein Bindemittel umfasst, durchgeführt wird, kann die Höchstzugkraft des Glasfaservlieses vor Auftragung der Beschichtung, die mindestens ein Leitfähigkeitsadditiv und mindestens ein Bindemittel umfasst, bzw. des beheizbaren Glasfaservlieses gemäß der vorliegenden Erfindung während der Herstellung des beheizbaren Glasfaservlieses gemäß der vorliegenden Erfindung und vor der Perforation und/oder Lochung bestimmt werden.

Die Ausmaße und Form des Glasfaservlieses der vorliegenden Erfindung können herkömmlich sein und sind daher nicht besonders begrenzt. In Draufsicht (d.h. in Blickrichtung des Lotes auf die Fläche, die von der Länge und Breite des Glasfaservlieses aufgespannt wird) kann das Glasfaservlies jede beliebige zweidimensionale Form aufweisen, z.B. rechteckig, quadratisch, kreisförmig, ellipsoid, in Form einer Raute oder eines Parallelogramms, etc.

Vorzugsweise weist das beheizbare Glasfaservlies gemäß der vorliegenden Erfindung in Draufsicht eine Fläche von mindestens 50,0 cm², mehr bevorzugt mindestens 64,0 cm², noch mehr bevorzugt mindestens 225 cm² und am meisten bevorzugt mindestens 400 cm², auf. Das beheizbare Glasfaservlies gemäß der vorliegenden Erfindung kann in Draufsicht eine Fläche von bis zu 500 m² aufweisen (beispielsweise falls das beheizbare Glasfaservlies als Rollware ausgeführt ist). Vorzugsweise weist das beheizbare Glasfaservlies in Draufsicht eine Fläche von nicht mehr als 8,00 m², mehr bevorzugt von nicht mehr als 6,00 m² auf, beispielsweise beträgt die Fläche des beheizbaren Glasfaservlieses gemäß der vorliegenden Erfindung in Draufsicht nicht mehr als 3,00 m², nicht mehr als 2,00 m² oder nicht mehr als 1,00 m² oder ist (insbesondere falls das beheizbare Glasfaservlies als Rollware ausgeführt ist) in Abschnitte dieser Größen teilbar, vorzugsweise ohne einen Bereich des beheizbaren Glasfaservlieses, welcher eine Beschichtung, die mindestens ein Leitfähigkeitsadditiv und mindestens ein Bindemittel umfasst, aufweist, zu durchtrennen, mehr bevorzugt ist das beheizbare Glasfaservlies gemäß der vorliegenden Erfindung parallel zu einer Kante des beheizbaren Glasfaservlieses in Abschnitte dieser Größen teilbar, ohne einen Bereich des beheizbaren Glasfaservlieses, welcher eine Beschichtung, die mindestens ein Leitfähigkeitsadditiv und mindestens ein Bindemittel umfasst, aufweist, zu durchtrennen. Beispielsweise kann das beheizbare Glasfaservlies (insbesondere falls das beheizbare Glasfaservlies als Rollware ausgeführt ist) abwechselnd Bereiche, die eine Beschichtung, die mindestens ein Leitfähigkeitsadditiv und mindestens ein Bindemittel umfasst, aufweisen, und Bereiche, die keine Beschichtung, die mindestens ein Leitfähigkeitsadditiv und mindestens ein Bindemittel umfasst, aufweisen, aufweisen. Mehr bevorzugt weist das beheizbare Glasfaservlies gemäß der vorliegenden Erfindung in Draufsicht eine Fläche von mindestens 50,0 cm², vorzugsweise von mindestens 64,0 cm², noch mehr bevorzugt von mindestens 225 cm² und am meisten bevorzugt von mindestens 400 cm², auf und das beheizbare Glasfaservlies gemäß der vorliegenden Erfindung weist in Draufsicht eine Fläche von nicht mehr als 8,00 m², vorzugsweise von nicht mehr als 6,00 m² auf, beispielsweise beträgt die Fläche des beheizbaren Glasfaservlieses gemäß der vorliegenden Erfindung in Draufsicht nicht mehr als 3,00 m², nicht mehr als 2,00 m² oder nicht mehr als 1,50 m² oder ist (insbesondere falls das beheizbare Glasfaservlies als Rollware ausgeführt ist) in Abschnitte dieser Größen teilbar, ohne einen Bereich des beheizbaren Glasfaservlieses, welcher eine Beschichtung, die mindestens ein Leitfähigkeitsadditiv und mindestens ein Bindemittel umfasst, aufweist, zu durchtrennen, vorzugsweise ist das beheizbare Glasfaservlies gemäß der vorliegenden Erfindung parallel zu einer Kante des beheizbaren Glasfaservlieses in Abschnitte dieser Größen teilbar, ohne einen Bereich des beheizbaren Glasfaservlieses, welcher eine Beschichtung, die mindestens ein Leitfähigkeitsadditiv und mindestens ein Bindemittel umfasst, aufweist, zu durchtrennen.

Vorzugsweise weist das beheizbare Glasfaservlies gemäß der vorliegenden Erfindung in Draufsicht die Form eines Quadrates, eines Rechtecks, einer Raute oder eines Parallelogramms auf und weist insbesondere eine Fläche wie im vorangegangen Absatz definiert auf. Insbesondere bevorzugt weist das beheizbare Glasfaservlies gemäß der vorliegenden Erfindung in Draufsicht die Form eines Quadrates oder eines Rechtecks auf.

Im mathematischen Sinn ist eine Raute ein Spezialfall eines Parallelogramms und ein Quadrat ist ein Spezialfall eines Rechtecks. In der vorliegenden Erfindung werden Rauten nicht als Parallelogramm und Quadrate nicht als Rechteck angesehen.

Falls das beheizbare Glasfaservlies gemäß der vorliegenden Erfindung in Draufsicht die Form einer Raute oder eines Parallelogramms aufweist, beträgt der spitze Winkel der Raute oder des Parallelogramms vorzugsweise nicht weniger als 30°, mehr bevorzugt nicht weniger als 45° und noch mehr bevorzugt nicht weniger als 60°.

Ein Quadrat, ein Rechteck, eine Raute und ein Parallelogramm weisen eine erste Kante und eine zweite Kante auf, die nicht parallel zueinander sind. Zu jeder dieser zwei Kanten existiert jeweils eine parallele und gleichlange Kante, weswegen der Einfachheit halber im Folgenden nur auf die erste und zweite Kante Bezug genommen wird.

Die erste und die zweite Kante des beheizbaren Glasfaservlieses gemäß der vorliegenden Erfindung können gleich lang sein, d.h. das beheizbare Glasfaservlies gemäß der vorliegenden Erfindung weist in Draufsicht die Form eines Quadrates oder einer Raute auf, oder die erste und die zweite Kante des beheizbaren Glasfaservlieses gemäß der vorliegenden Erfindung können unterschiedlich lang sein, d.h. das beheizbare Glasfaservlies gemäß der vorliegenden Erfindung weist in Draufsicht die Form eines Rechtecks oder Parallelogramms auf. Falls die erste und die zweite Kante des beheizbaren Glasfaservlieses gemäß der vorliegenden Erfindung unterschiedlich lang sind, wird die kürzere Kante als erste Kante und die längere Kante als zweite Kante angesehen.

Die erste Kante des beheizbaren Glasfaservlieses gemäß der vorliegenden Erfindung weist vorzugsweise eine Länge von 8,00 bis 100 cm, mehr bevorzugt von 15,0 bis 100 cm und am meisten bevorzugt von 20,0 cm bis 100 cm auf. Die zweite Kante des beheizbaren Glasfaservlieses gemäß der vorliegenden Erfindung kann eine Länge von bis zu 500 m aufweisen (beispielsweise falls das beheizbare Glasfaservlies als Rollware ausgeführt ist). Die zweite Kante des beheizbaren Glasfaservlieses gemäß der vorliegenden Erfindung weist vorzugsweise eine Länge von 8,00 bis 600 cm, mehr bevorzugt von 15,0 bis 600 cm und am meisten bevorzugt von 20,0 cm bis 600 cm auf oder die zweite Kante des beheizbaren Glasfaservlieses gemäß der vorliegenden Erfindung (insbesondere falls das beheizbare Glasfaservlies als Rollware ausgeführt ist) ist in Abschnitte einer Länge von 8,00 bis 600 cm, mehr bevorzugt von 15,0 bis 600 cm und am meisten bevorzugt von 20,0 cm bis 600 cm, beispielsweise 20,0 bis 250 cm, 20,0 bis 200 cm oder 20,0 bis 150 cm, teilbar, vorzugsweise ohne einen Bereich des beheizbaren Glasfaservlieses, welcher eine Beschichtung, die mindestens ein Leitfähigkeitsadditiv und mindestens ein Bindemittel umfasst, aufweist, zu durchtrennen, mehr bevorzugt ist die zweite Kante des beheizbaren Glasfaservlieses gemäß der vorliegenden Erfindung (insbesondere falls das beheizbare Glasfaservlies als Rollware ausgeführt ist) parallel zu einer anderen Kante des beheizbaren Glasfaservlieses, vorzugsweise parallel zu der ersten Kante, in Abschnitte dieser Längen teilbar, ohne einen Bereich des beheizbaren Glasfaservlieses, welcher eine Beschichtung, die mindestens ein Leitfähigkeitsadditiv und mindestens ein Bindemittel umfasst, aufweist, zu durchtrennen. Insbesondere bevorzugt weist die erste Kante des beheizbaren Glasfaservlieses gemäß der vorliegenden Erfindung eine Länge von 8,00 bis 100 cm, vorzugsweise von 15,0 bis 100 cm und am meisten bevorzugt von 20,0 cm bis 100 cm auf, und die zweite Kante des beheizbaren Glasfaservlieses gemäß der vorliegenden Erfindung weist eine Länge von 8,00 bis 600 cm, vorzugsweise von 15,0 bis 600 cm und am meisten bevorzugt von 20,0 cm bis 600 cm auf oder die zweite Kante des beheizbaren Glasfaservlieses gemäß der vorliegenden Erfindung (insbesondere falls das beheizbare Glasfaservlies als Rollware ausgeführt ist) ist in Abschnitte einer Länge von 8,00 bis 600 cm, mehr bevorzugt von 15,0 bis 600 cm und am meisten bevorzugt von 20,0 cm bis 600 cm, beispielsweise 20,0 bis 250 cm, 20,0 bis 200 cm oder 20,0 bis 150 cm, teilbar, ohne einen Bereich des beheizbaren Glasfaservlieses, welcher eine Beschichtung, die mindestens ein Leitfähigkeitsadditiv und mindestens ein Bindemittel umfasst, aufweist, zu durchtrennen, vorzugsweise ist die zweite Kante des beheizbaren Glasfaservlieses gemäß der vorliegenden Erfindung (insbesondere falls das beheizbare Glasfaservlies als Rollware ausgeführt ist) parallel zu einer anderen Kante, vorzugsweise parallel zu der ersten Kante, des beheizbaren Glasfaservlieses in Abschnitte dieser Längen teilbar, ohne einen Bereich des beheizbaren Glasfaservlieses, welcher eine Beschichtung, die mindestens ein Leitfähigkeitsadditiv und mindestens ein Bindemittel umfasst, aufweist, zu durchtrennen.

In einer Ausführungsform weist die erste Kante des beheizbaren Glasfaservlieses gemäß der vorliegenden Erfindung eine Länge von 8,00 bis 100 cm, mehr bevorzugt von 15,0 bis 100 cm und am meisten bevorzugt von 20,0 cm bis 100 cm auf, und die zweite Kante des beheizbaren Glasfaservlieses gemäß der vorliegenden Erfindung weist eine Länge von 8,00 bis 300 cm, mehr bevorzugt von 15,0 bis 200 cm und am meisten bevorzugt von 20,0 cm bis 150 cm auf, oder die zweite Kante des beheizbaren Glasfaservlieses gemäß der vorliegenden Erfindung (insbesondere falls das beheizbare Glasfaservlies als Rollware ausgeführt ist) ist in Abschnitte dieser Längen teilbar, ohne einen Bereich des beheizbaren Glasfaservlieses, welcher eine Beschichtung, die mindestens ein Leitfähigkeitsadditiv und mindestens ein Bindemittel umfasst, aufweist, zu durchtrennen, vorzugsweise ist die zweite Kante des beheizbaren Glasfaservlieses gemäß der vorliegenden Erfindung (insbesondere falls das beheizbare Glasfaservlies als Rollware ausgeführt ist) parallel zu einer anderen Kante, vorzugsweise parallel zu der ersten Kante, des beheizbaren Glasfaservlieses in Abschnitte dieser Längen teilbar, ohne einen Bereich des beheizbaren Glasfaservlieses, welcher eine Beschichtung, die mindestens ein Leitfähigkeitsadditiv und mindestens ein Bindemittel umfasst, aufweist, zu durchtrennen.

In einer weiteren Ausführungsform
- weist das beheizbare Glasfaservlies die Form eines Rechtecks auf, wobei die Länge der ersten Kante 10,0 bis 100 cm, vorzugsweise 50,0 bis 100 cm beträgt, und die zweite Kante des beheizbaren Glasfaservlieses eine Länge von 8,00 bis 600 cm, mehr bevorzugt von 15,0 bis 600 cm und am meisten bevorzugt von 20,0 cm bis 600 cm, beispielsweise 20,0 bis 250 cm, 20,0 bis 200 cm oder 20,0 bis 150 cm aufweist oder die zweite Kante (insbesondere falls das beheizbare Glasfaservlies als Rollware ausgeführt ist) eine Länge von bis zu 500 m aufweist, wobei die zweite Kante des beheizbaren Glasfaservlieses in Abschnitte einer Länge von 8,00 bis 600 cm, mehr bevorzugt von 15,0 bis 600 cm und am meisten bevorzugt von 20,0 cm bis 600 cm, beispielsweise 20,0 bis 250 cm, 20,0 bis 200 cm oder 20,0 bis 150 cm, teilbar ist, ohne einen Bereich des beheizbaren Glasfaservlieses, welcher eine Beschichtung, die mindestens ein Leitfähigkeitsadditiv und mindestens ein Bindemittel umfasst, aufweist, zu durchtrennen, vorzugsweise parallel zu der ersten Kante,
- weist das beheizbare Glasfaservlies (insbesondere falls das beheizbare Glasfaservlies als Rollware ausgeführt ist) zwei bis 250, beispielsweise 2 bis 500 voneinander getrennte Bereiche, welche mit der Beschichtung, die mindestens ein Leitfähigkeitsadditiv und mindestens ein Bindemittel umfasst, beschichtet sind, wobei diese Bereiche in Form eines Quadrats oder Rechtecks, vorzugsweise in Form eines Rechtecks, ausgeführt sind,
- erstreckt sich jeder dieser Bereiche von der zweiten Kante des beheizbaren Glasfaservlieses zu der Kante, die zu dieser zweiten Kante parallel ist, oder ist maximal 10,0 cm, bevorzugt maximal 8,00 cm, noch mehr bevorzugt maximal 6,0 cm (wie 0,1 cm) jeweils von der zweiten Kante des beheizbaren Glasfaservlieses und der Kante die zu dieser zweiten Kante parallel ist, entfernt und parallel zueinander angeordnet,
- weist jeder dieser Bereiche eine Fläche von 0,25 bis 2,00 m² auf, und
- beträgt der Abstand zwischen zwei Bereichen, mindestens 10,0 cm, bevorzugt mindestens 30,0 cm und am meisten bevorzugt mindestens 50,0 cm.

In einer weiteren Ausführungsform des Glasfaservlieses der vorliegenden Erfindung weist das Glasfaservlies die Form eines Rechtecks oder Parallelogramms, insbesondere die Form eines Rechtecks, auf, wobei die erste Kante zwischen 66,0 und 100 cm misst, und die zweite Kante zwischen 120 und 160 cm misst, vorzugsweise die erste Kante zwischen 76,0 und 96,0 cm misst, und die zweite Kante zwischen 130 und 150 cm misst.

Falls das beheizbare Glasfaservlies gemäß der vorliegenden Erfindung in Draufsicht die Form eines Quadrates oder einer Raute aufweist, sind die erste und die zweite Kante gleich lang, und beide Kanten weisen üblicherweise die Abmessungen der ersten Kante wie oben ausgeführt auf.

In einer bevorzugten Ausführungsform (im Folgenden auch als "Ausführungsform (A)" bezeichnet) des Glasfaservlieses der vorliegenden Erfindung beträgt das Seitenverhältnis zwischen der ersten Kante des Parallelogramms bzw. Rechtecks und der zweiten Kante des Parallelogramms bzw. Rechtecks vorzugsweise zwischen 0,20 und < 1,00 oder das beheizbare Glasfaservlies weist die Form einer Raute oder eines Quadrates auf, mehr bevorzugt beträgt das Seitenverhältnis zwischen der ersten Kante des Parallelogramms bzw. Rechtecks und der zweiten Kante des Parallelogramms bzw. Rechtecks zwischen 0,40 und 0,80, noch mehr bevorzugt zwischen 0,50 und 0,70.

Ausführungsform (A) ist beispielsweise geeignet, um herkömmliche Glasfaservliese, die zur Wand- und/oder Deckenmontage verwendet werden, zu ersetzen.

In einer alternativen Ausführungsform (im Folgenden auch als "Ausführungsform (B)" bezeichnet) kann das Glasfaservlies band- oder streifenförmig in ausgestaltet sein (z.B. als Bandware), beispielsweise in Form eines Rechtecks oder Parallelogramms. In dieser Ausführungsform (B) beträgt das Seitenverhältnis zwischen der ersten Kante des Parallelogramms bzw. Rechtecks und der zweiten Kante des Parallelogramms bzw. Rechtecks üblicherweise weniger als 0,40, vorzugsweise weniger als 0,30, mehr bevorzugt weniger als 0,20, beispielsweise weniger als 0,10, weniger als 0,05 oder weniger als 0,025.

Ausführungsform (B) ist beispielsweise geeignet, um der Schimmelbildung an Wänden, Decken und Böden, insbesondere in Ecken oder an Stellen mit Kältebrücken vorzubeugen und/oder zu verhindern.

Im Folgenden werden alle Ausfiihrungsformen des erfindungsgemäßen beheizbaren Glasfaservlieses beschrieben, es sei denn, es wird ausdrücklich auf bestimmte Ausfiihrungsformen verwiesen.

Wie oben ausgeführt, kann das beheizbare Glasfaservlies nur teilweise mit der Beschichtung, die mindestens ein Leitfähigkeitsadditiv und mindestens ein Bindemittel umfasst, beschichtet sein. Falls beispielsweise ein bestimmter Bereich eines Gegenstandes, eines Bodens, einer Wand und/oder einer Decke ganzflächig mit Glasfaservlies versehen werden soll, jedoch nur Teile dieses bestimmten Bereiches beheizt werden sollen (beispielsweise können sich auf einem Boden, an einer Wand und/oder an einer Decke Bilder und/oder Möbel befinden bzw. ist deren Anbringung geplant), kann/können das/die teilweise mit der Beschichtung, die mindestens ein Leitfähigkeitsadditiv und mindestens ein Bindemittel umfasst, beschichtete(n) beheizbare(n) Glasfaservlies(e) so angebracht werden, dass nur der/die zu beheizende(n) Bereich(e) die Beschichtung, die mindestens ein Leitfähigkeitsadditiv und mindestens ein Bindemittel umfasst, aufweist/aufweisen. Hierdurch kann die Anzahl der Glasfaservliese, welche keine Beschichtung, die mindestens ein Leitfähigkeitsadditiv und mindestens ein Bindemittel umfasst, reduziert werden bzw. es kann vollständig auf diese verzichtet werden. Somit kann beispielsweise der Arbeitsaufwand, der notwendig ist, mehrere Glasfaservliese auf Stoß zu montieren, verringert werden.

Wie oben ausgeführt, kann die Beschichtung, die mindestens ein Leitfähigkeitsadditiv und mindestens ein Bindemittel umfasst, auf beiden Seiten des Glasfaservlieses oder nur auf einer Seite des beheizbaren Glasfaservlieses aufgebracht sein.

In einer Ausführungsform weisen in Draufsicht auf eine Fläche des beheizbaren Glasfaservlieses, vorzugsweise mindestens 25%, mehr bevorzugt mindestens 50% und am meisten bevorzugt mindestens 75% der betrachteten Fläche mindestens auf der dem Betrachter zugewandten oder abgewandten Seite des beheizbaren Glasfaservlieses eine Beschichtung, die mindestens ein Leitfähigkeitsadditiv und mindestens ein Bindemittel umfasst, auf.

Dies soll anhand der folgenden Beispiele erläutert werden.
- Falls das beheizbare Glasfaservlies auf einer Seite vollflächig mit der Beschichtung, die mindestens ein Leitfähigkeitsadditiv und mindestens ein Bindemittel umfasst, beschichtet ist, weisen 100% der betrachteten Fläche eine Beschichtung, die mindestens ein Leitfähigkeitsadditiv und mindestens ein Bindemittel umfasst, auf.
- Falls das beheizbare Glasfaservlies jeweils auf beiden Seiten vollflächig mit der Beschichtung, die mindestens ein Leitfähigkeitsadditiv und mindestens ein Bindemittel umfasst, beschichtet ist, weisen ebenfalls 100% der betrachteten Fläche eine Beschichtung, die mindestens ein Leitfähigkeitsadditiv und mindestens ein Bindemittel umfasst, auf.
- Falls eine Hälfte des beheizbaren Glasfaservlieses auf einer Seite mit der Beschichtung, die mindestens ein Leitfähigkeitsadditiv und mindestens ein Bindemittel umfasst, beschichtet ist und die andere Hälfte, also der Teil des Glasfaservlieses, der zunächst auf keiner Seite eine Beschichtung, die mindestens ein Leitfähigkeitsadditiv und mindestens ein Bindemittel umfasst, aufweist, auf der anderen Seite mit der Beschichtung, die mindestens ein Leitfähigkeitsadditiv und mindestens ein Bindemittel umfasst, beschichtet wird, weisen ebenfalls 100% der betrachteten Fläche eine Beschichtung, die mindestens ein Leitfähigkeitsadditiv und mindestens ein Bindemittel umfasst, auf.
- Falls jedoch eine Hälfte des beheizbaren Glasfaservlieses auf beiden Seiten mit der Beschichtung, die mindestens ein Leitfähigkeitsadditiv und mindestens ein Bindemittel umfasst, beschichtet ist und die andere Hälfte auf keiner Seite eine Beschichtung, die mindestens ein Leitfähigkeitsadditiv und mindestens ein Bindemittel umfasst, aufweist, weisen 50% der betrachteten Fläche eine Beschichtung, die mindestens ein Leitfähigkeitsadditiv und mindestens ein Bindemittel umfasst, auf.

In einer Ausfiihrungsform weisen in Draufsicht auf eine Fläche des beheizbaren Glasfaservlieses, vorzugsweise mindestens 95,0%, mehr bevorzugt mindestens 97,5% und am meisten bevorzugt 100% der betrachteten Fläche mindestens auf der dem Betrachter zugewandten oder abgewandten Seite des beheizbaren Glasfaservlieses eine Beschichtung, die mindestens ein Leitfähigkeitsadditiv und mindestens ein Bindemittel umfasst, auf.

Falls das beheizbare Glasfaservlies gemäß der vorliegenden Erfindung einen oder mehrere voneinander getrennte Bereiche, welche(r) mit der Beschichtung, die mindestens ein Leitfähigkeitsadditiv und mindestens ein Bindemittel umfasst, beschichtet ist/sind, aufweist, so weist jeder Bereich der Beschichtung, die mindestens ein Leitfähigkeitsadditiv und mindestens ein Bindemittel umfasst, vorzugsweise mindestens eine Fläche von 64,0 cm², mehr bevorzugt mindestens 225 cm² und am meisten bevorzugt mindestens 400 cm² auf.

Falls das beheizbare Glasfaservlies gemäß der vorliegenden Erfindung einen oder mehrere voneinander getrennte Bereich(e), welche(r) mit der Beschichtung, die mindestens ein Leitfähigkeitsadditiv und mindestens ein Bindemittel umfasst, beschichtet ist/sind, aufweist, so weist jeder Bereich der Beschichtung, die mindestens ein Leitfähigkeitsadditiv und mindestens ein Bindemittel umfasst, vorzugsweise eine Fläche von nicht mehr als 5,00 m², mehr bevorzugt von nicht mehr als 3,00 m² und am meisten bevorzugt von nicht mehr als 1,00 m² auf.

Wie oben ausgeführt werden der Einfachheit halber die Begriffe "Bereich", "Bereiche" oder "Bereich(e)" für den einen oder die mehreren voneinander getrennte Bereich(e), welche(r) mit der Beschichtung, die mindestens ein Leitfähigkeitsadditiv und mindestens ein Bindemittel umfasst, beschichtet ist/sind, verwendet.

Der Abstand zwischen zwei Bereichen, sofern mindestens zwei Bereiche auf dem beheizbaren Glasfaservlies angeordnet sind, beträgt vorzugsweise mindestens 10,0 cm, mehr bevorzugt mindestens 30,0 cm und am meisten bevorzugt mindestens 50,0 cm.

Vorzugsweise weist jeder Bereich der Beschichtung, die mindestens ein Leitfähigkeitsadditiv und mindestens ein Bindemittel umfasst, in Draufsicht die Form eines Quadrates, eines Rechtecks, einer Raute oder eines Parallelogramms auf, mehr bevorzugt die Form eines Quadrates oder eines Rechtecks.

Falls ein oder mehrere Bereich(e) der Beschichtung, die mindestens ein Leitfähigkeitsadditiv und mindestens ein Bindemittel umfasst, in Draufsicht die Form einer Raute oder eines Parallelogramms aufweist/aufweisen, beträgt der spitze Winkel der Raute(n) oder des/der Parallelogramms/Parallelogramme vorzugsweise nicht weniger als 30°, mehr bevorzugt nicht weniger als 45° und noch mehr bevorzugt nicht weniger als 60°.

Wie oben ausgeführt, weisen ein Quadrat, ein Rechteck, eine Raute und ein Parallelogramm eine erste Kante und eine zweite Kante auf, die nicht parallel zueinander sind. Zu jeder dieser zwei Kanten existiert jeweils eine parallele und gleichlange Kante, weswegen der Einfachheit halber im Folgenden nur auf die erste und zweite Kante Bezug genommen wird.

Im Folgenden wird die Ausführungsform, in der das beheizbare Glasfaservlies nur teilweise mit der Beschichtung, die mindestens ein Leitfähigkeitsadditiv und mindestens ein Bindemittel umfasst, beschichtet ist, weiter beschrieben.

Die erste und die zweite Kante eines Bereiches der Beschichtung, die mindestens ein Leitfähigkeitsadditiv und mindestens ein Bindemittel umfasst, können gleich lang sein, d.h. der Bereich der Beschichtung, die mindestens ein Leitfähigkeitsadditiv und mindestens ein Bindemittel umfasst, weist in Draufsicht die Form eines Quadrates oder einer Raute auf, oder die erste und die zweite Kante des Bereiches der Beschichtung, die mindestens ein Leitfähigkeitsadditiv und mindestens ein Bindemittel umfasst, können unterschiedlich lang sein, d.h. der Bereich der Beschichtung, die mindestens ein Leitfähigkeitsadditiv und mindestens ein Bindemittel umfasst, weist in Draufsicht die Form eines Rechtecks oder Parallelogramms auf. Falls die erste und die zweite Kante des Bereiches der Beschichtung, die mindestens ein Leitfähigkeitsadditiv und mindestens ein Bindemittel umfasst, unterschiedlich lang sind, wird die kürzere Kante als erste Kante und die längere Kante als zweite Kante angesehen.

Die erste Kante des Bereiches der Beschichtung, die mindestens ein Leitfähigkeitsadditiv und mindestens ein Bindemittel umfasst, weist vorzugsweise eine Länge von 8,00 bis 100 cm, mehr bevorzugt von 15,0 bis 100 cm und am meisten bevorzugt von 20,0 cm bis 100 cm auf und/oder die zweite Kante des Bereiches der Beschichtung, die mindestens ein Leitfähigkeitsadditiv und mindestens ein Bindemittel umfasst, weist vorzugsweise eine Länge von 8,00 bis 500 cm, mehr bevorzugt von 15,0 bis 300 cm und am meisten bevorzugt von 20,0 cm bis 100 cm auf. Insbesondere bevorzugt weist die erste Kante des Bereiches der Beschichtung, die mindestens ein Leitfähigkeitsadditiv und mindestens ein Bindemittel umfasst, eine Länge von 8,00 bis 100 cm, vorzugsweise von 15,0 bis 100 cm und am meisten bevorzugt von 20,0 cm bis 100 cm auf, und die zweite Kante des Bereiches der Beschichtung, die mindestens ein Leitfähigkeitsadditiv und mindestens ein Bindemittel umfasst, weist eine Länge von 8,00 bis 500 cm, vorzugsweise von 15,0 bis 300 cm und am meisten bevorzugt von 20,0 cm bis 100 cm auf.

Falls das beheizbare Glasfaservlies gemäß der vorliegenden Erfindung in Draufsicht die Form eines Quadrates, eines Rechtecks, einer Raute oder eines Parallelogramms aufweist, wie oben ausgeführt, können der/die Bereich(e) der Beschichtung, die mindestens ein Leitfähigkeitsadditiv und mindestens ein Bindemittel umfasst, so ausgeführt sein, dass sie sich von der zweiten Kante des beheizbaren Glasfaservlieses zu der Kante die zu dieser zweiten Kante parallel ist, erstrecken oder maximal 10,0 cm, bevorzugt maximal 8,00 cm, noch mehr bevorzugt maximal 6,0 cm (wie 0,1 cm) jeweils von der zweiten Kante des beheizbaren Glasfaservlieses und der Kante die zu dieser zweiten Kante parallel ist entfernt angeordnet sind, üblicherweise parallel zueinander. Beispielsweise, erstrecken sich der/die beheizbare(n) Bereich(e), falls das beheizbare Glasfaservlies in Draufsicht die Form eines Rechtecks aufweist, über die gesamte Breite des beheizbaren Glasfaservlieses.

In einer bevorzugten Ausführungsform sind bis zu vier Bereiche auf dem Glasfaservlies so angeordnet wie im vorangegangen Absatz definiert. Inbesondere bevorzugt weisen in dieser Ausführungsform das beheizbare Glasfaservlies die Form eines Rechtecks und die Bereiche die Form eines Rechtecks oder eines Quadrates auf. Hieraus resultiert eine "leiterartige" Struktur, welche ermöglicht, passende Stücke des beheizbaren Glasfaservlieses zurechtzuschneiden.

### Glasfaservliesbauteil

Die vorliegende Erfindung ist ferner auf ein Glasfaservliesbauteil gerichtet, umfassend das beheizbare Glasfaservlies gemäß der vorliegenden Erfindung und mindestens zwei elektrisch leitfähige Kontaktelemente, die an das beheizbare Glasfaservlies derart angeordnet sind, dass das beheizbare Glasfaservlies mit elektrischer Spannung und/oder elektrischem Strom beaufschlagbar ist.

Bezüglich des beheizbaren Glasfaservlieses wird vollumfänglich auf den ersten erfindungsgemäßen Aspekt verwiesen.

Die bevorzugten Abmessungen, inklusive Dicke, die Höchstzugkraft in Längs- und/oder Querrichtung etc. des beheizbaren Glasfaservlieses des ersten erfindungsgemäßen Aspektes ist/sind ebenfalls bevorzugte Abmessungen, inklusive Dicke, Höchstzugkraft in Längs- und/oder Querrichtung etc. des erfindungsgemäßen Glasfaservliesbauteils. Die Messung der Höchstzugkraft wird so durchgeführt, dass die mindestens zwei elektrisch leitfähigen Kontaktelemente die Messung nicht beeinflussen.

### Elektrische Kontaktelemente

Die Kontaktelemente können insbesondere Kontaktstreifen oder Kontaktbänder darstellen.

Die Kontaktelemente können in einer Ausfiihrungsform als gerade Streifen ausgebildet sein. Allerdings ist die Form der Kontaktelemente auch für weitere Ausführungsformen nicht auf eine solche gerade Konfiguration beschränkt. Die Kontaktelemente können beispielsweise durch Streifen gebildet werden, die in der Hauptausdehnungsrichtung des beheizbaren Glasfaservlieses kurvenförmig verlaufen.

Die Breite der Kontaktelemente ist nicht kritisch. Jedoch sollten die Kontaktelemente derart dimensioniert sein, dass sie eine Beaufschlagung des beheizbaren Glasfaservlieses mit elektrischer Spannung und/oder elektrischem Strom, vorzugsweise über die gesamte Länge und/oder Breite des beheizbaren Glasfaservlieses erlauben. Es ist insbesondere bevorzugt, dass zwei der mindestens zwei elektrisch leitfähigen Kontaktelemente an sich gegenüberliegenden Randbereichen des beheizbaren Glasfaservlieses angeordnet sind.

Falls das beheizbare Glasfaservlies gemäß der vorliegenden Erfindung nur teilweise mit der Beschichtung, die mindestens ein Leitfähigkeitsadditiv und mindestens ein Bindemittel umfasst, beschichtet ist, sind vorzugsweise jeweils zwei der mindestens zwei elektrisch leitfähigen Kontaktelemente an sich gegenüberliegenden Randbereichen des/der Bereiche, welche(r) mit der Beschichtung, die mindestens ein Leitfähigkeitsadditiv und mindestens ein Bindemittel umfasst, beschichtet ist/sind, derart angeordnet, dass jeder der Bereiche mit elektrischer Spannung und/oder elektrischem Strom beaufschlagbar ist. Beispielsweise können bei einer 2 x n-Anordnung der Bereiche wie oben ausgeführt, zwei Paare oder n Paare von elektrisch leitfähigen Kontaktelementen derart angeordnet sein, dass alle Bereiche mit elektrischer Spannung und/oder elektrischem Strom beaufschlagbar sind. Bei einer 2 x 4-Anordnung der Bereiche, können entsprechend zwei oder vier Paare von elektrisch leitfähigen Kontaktelementen derart angeordnet sein, dass alle acht Bereiche mit elektrischer Spannung und/oder elektrischem Strom beaufschlagbar sind. Bei einer 1 x n-Anordnung der Bereiche, wie oben ebenfalls beispielsweise angeführt, kann entsprechend ein Paar oder n Paare von elektrisch leitfähigen Kontaktelementen derart angeordnet sein, dass alle n Bereiche mit elektrischer Spannung und/oder elektrischem Strom beaufschlagbar sind. Vorzugsweise ist bei einer 1 x n-Anordnung der Bereiche ein Paar von elektrisch leitfähigen Kontaktelementen derart angeordnet, dass alle n Bereiche mit elektrischer Spannung und/oder elektrischem Strom beaufschlagbar sind

Wie oben ausgeführt, werden der Einfachheit halber die Begriffe "Bereich", "Bereiche" oder "Bereich(e)" für den einen oder die mehreren voneinander getrennte Bereich(e), welche(r) mit der Beschichtung, die mindestens ein Leitfähigkeitsadditiv und mindestens ein Bindemittel umfasst, beschichtet ist/sind, verwendet.

Vorzugsweise umfasst jedes elektrisch leitfähige Kontaktelement einen elektrisch leitenden Metallstreifen, insbesondere aus Kupfer, wobei mehr bevorzugt jedes dieser elektrisch leitenden Kontaktelemente eine Klebeschicht aufweist, die sich auf der dem beheizbaren Glasfaservlies abgewandten Seite der elektrisch leitfähigen Kontaktelemente befindet, die Klebeschicht ist insbesondere mit einer Schutzfolie bedeckt.

Die Dicke jedes elektrisch leitfähigen Kontaktelements beträgt vorzugsweise maximal 120 µm, vorzugsweise maximal 110 µm, mehr bevorzugt maximal 90 µm.

Vorzugsweise steht jedes der elektrisch leitfähigen Kontaktelemente über eine Kante des beheizbaren Glasfaservlieses um mindestens 10 cm, mehr bevorzugt um mindestens 25 cm, noch mehr bevorzugt mindestens 40 cm über. Vorzugsweise stehen die elektrisch leitfähigen Kontaktelemente über dieselbe Kante des beheizbaren Glasfaservlieses über, insbesondere falls das beheizbare Glasfaservlies die Form eines Parallelogramms bzw. Rechtecks aufweist. In dieser Ausführungsform ist es beispielsweise möglich, die Anschlussklemme auf Höhe der Fußleisten anzubringen und diese somit in der Fußleiste versenken.

Falls das beheizbare Glasfaservlies gemäß der vorliegenden Erfindung nur teilweise mit der Beschichtung, die mindestens ein Leitfähigkeitsadditiv und mindestens ein Bindemittel umfasst, beschichtet ist, befinden sich die elektrischen Kontaktelemente vorzugsweise auch auf unbeschichteten Teilen des beheizbaren Glasfaservlieses, beispielsweise zwischen zwei der Bereiche und/oder zwischen dem Ende eines Bereiches und dem Ende des Glasfaservlieses, falls das Glasfaservlies nicht bis zu dem entsprechenden Ende mit der Beschichtung, die mindestens ein Leitfähigkeitsadditiv und mindestens ein Bindemittel umfasst, beschichtet ist. Jedes der elektrisch leitfähigen Kontaktelemente kann ebenfalls über eine Kante des beheizbaren Glasfaservlieses wie im vorangegangenen Absatz definiert überstehen.

Jedes elektrisch leitfähige Kontaktelement weist vorzugsweise eine Breite von 1,4 bis 4,4 cm, mehr bevorzugt von 1,9 bis 3,9 cm, noch mehr bevorzugt von 2,4 bis 3,4 cm auf.

Vorzugsweise sind die mindestens zwei elektrisch leitfähigen Kontaktelemente parallel angeordnet und der Abstand zwischen ihren Innenkanten beträgt mindestens 30 cm, vorzugsweise mindestens 40 cm, mehr bevorzugt mindestens 50 cm.

Vorzugsweise sind die mindestens zwei elektrisch leitfähigen Kontaktelemente parallel angeordnet und der Abstand zwischen ihren Innenkanten beträgt nicht mehr als 3,00 m, vorzugsweise nicht mehr als 2,00 m und am meisten bevorzugt nicht mehr als 1,00 m.

Vorzugsweise ist jedes elektrisch leitfähige Kontaktelement 0,0 bis 10,0 cm (wie 0,1 bis 10,0 cm), mehr bevorzugt 0,0 bis 8,0 cm (wie 0,1 bis 8,0 cm), noch mehr bevorzugt 0,0 bis 6,0 cm (wie 0,1 bis 6,0 cm) von dem Rand des beheizbaren Glasfaservlieses entfernt angeordnet. In dieser Variante ist/sind die Beschichtung, die mindestens ein Leitfähigkeitsadditiv und mindestens ein Bindemittel umfasst, bzw. die Bereiche derart angeordnet, dass eine Beaufschlagung mit elektrischer Spannung und/oder elektrischem Strom möglich ist.

Das erfindungsgemäße Glasfaservliesbauteil weist vorzugsweise eine spezifische Leistung von 20 bis 1000 W/m² auf, vorzugsweise 50 bis 800 W/m², mehr bevorzugt 100 bis 600 W/m² und am meisten bevorzugt 200 bis 400 W/m² auf. Die Leistung wird mit einem Leistungsmessgerät in Abhängigkeit der angelegten Spannung gemessen. Hierzu wird üblicherweise ein spannungsstabilisiertes Netzteil, welches 24 V Wechselspannung zur Verfügung stellt, verwendet.

Die Kontaktelemente können auf jegliche bekannte Weise auf das beheizbare Glasfaservlies angebracht werden, z.B. mittels Aufdrucken, Einlegen, Einlaminieren, Aufkleben, thermischen Spritzen (wie Lichtbogenspritzen) oder Plasmaspritzen. Für eine einfache Handhabung und Herstellung des Glasfaservliesbauteils ist jedoch ein Aufkleben der Kontaktelemente auf das beheizbare Glasfaservlies bevorzugt. Für diese Ausführungsform weisen die Kontaktelemente vorzugsweise eine Klebschicht auf.

Die Beschichtung, die mindestens ein Leitfähigkeitsadditiv und mindestens ein Bindemittel umfasst, dringt in das Glasfaservlies ein bzw. durchdringt dieses, wie bereits oben ausgeführt. Daher können sich die Kontaktelemente auf beliebigen Seiten des beheizbaren Glasfaservlieses befinden, unabhängig davon, ob die Beschichtung, die mindestens ein Leitfähigkeitsadditiv und mindestens ein Bindemittel umfasst, auf beiden Seiten des Glasfaservlieses oder nur auf einer Seite des beheizbaren Glasfaservlieses aufgebracht ist. Üblicherweise befinden sich alle Kontaktelemente auf einer Seite des beheizbaren Glasfaservlieses. Dadurch wird normalerweise die Ver- und Bearbeitung erleichtert.

In einer Variante ist die Beschichtung, die mindestens ein Leitfähigkeitsadditiv und mindestens ein Bindemittel umfasst, nur auf einer Seite des beheizbaren Glasfaservlieses aufgebracht. In dieser Variante können sich die elektrischen Kontaktelemente auf derselben Seite wie die Beschichtung, die mindestens ein Leitfähigkeitsadditiv und mindestens ein Bindemittel umfasst, angebracht sein, oder auf der gegenüberliegenden Seite. Falls, in dieser Variante, die elektrischen Kontaktelemente auf der gegenüberliegenden Seite der Beschichtung, die mindestens ein Leitfähigkeitsadditiv und mindestens ein Bindemittel umfasst, angebracht sind, sind die oben angeführten weiteren Schichten üblicherweise auf der Beschichtung, die mindestens ein Leitfähigkeitsadditiv und mindestens ein Bindemittel umfasst, aufgebracht. Ferner wäre es möglich diese weiteren Schichten vor oder nach Anbringung der elektrischen Kontaktelemente aufzubringen. Falls in dieser Variante die elektrischen Kontaktelemente auf derselben Seite wie die Beschichtung, die mindestens ein Leitfähigkeitsadditiv und mindestens ein Bindemittel umfasst, angebracht sind, werden die oben angeführten weiteren Schichten üblicherweise nach Anbringung der der elektrischen Kontaktelemente aufgebracht. Andernfalls ist u.U. eine elektrisch leitende Verbindung zwischen den Kontaktelementen und der Beschichtung, die mindestens ein Leitfähigkeitsadditiv und mindestens ein Bindemittel umfasst, nicht oder nur eingeschränkt möglich. In einer bevorzugten Form dieser Variante sind die elektrischen Kontaktelemente auf derselben Seite wie die Beschichtung, die mindestens ein Leitfähigkeitsadditiv und mindestens ein Bindemittel umfasst, angebracht, und eine Vliesschicht ist auf derselben Seite wie die Beschichtung, die mindestens ein Leitfähigkeitsadditiv und mindestens ein Bindemittel umfasst, angebracht, wobei diese Vliesschicht normalerweise kein Leitfähigkeitsadditiv enthält. D.h. die elektrischen Kontaktelemente befinden sich zwischen dem erfindungsgemäßen beheizbaren Glasfaservlies und dieser Vliesschicht. Eine derartige Vliesschicht weist, wie oben ausgeführt, vorzugsweise ein Flächengewicht von nicht mehr als 100 g/m², mehr bevorzugt nicht mehr als 60 g/m² und noch mehr bevorzugt nicht mehr als 30 g/m² auf. Diese Vliesschicht, falls vorhanden, kann ein Kunststoff- und/oder ein Glasfaservlies aufweisen bzw. daraus bestehen, beispielsweise ein Glasfaservlies aufweisen bzw. daraus bestehen. Bei dieser Variante wäre es möglich, dass die elektrischen Kontaktelemente durchgängig auf dieser Vliesschicht angebracht sind, jedoch das beheizbare Glasfaservlies gemäß der vorliegenden Erfindung nur abschnittsweise, üblicherweise in regelmäßigen Abständen, darauf angebracht ist. In dieser Variante wäre es möglich, ein oder mehrere Stücke mit der benötigten Größe abzuschneiden.

In einer bevorzugten Ausführungsform
- weist das beheizbare Glasfaservlies (und somit das Glasfaservliesbauteil) die Form eines Rechtecks auf, wobei die erste Kante zwischen 66,0 und 100 cm misst und die zweite Kante zwischen 120 und 160 cm misst, vorzugsweise die erste Kante zwischen 76,0 und 96,0 cm misst und die zweite Kante zwischen 130 und 150 cm misst,
- weisen in Draufsicht auf eine Fläche des beheizbaren Glasfaservlieses, vorzugsweise mindestens 95,0%, mehr bevorzugt mindestens 97,5% und am meisten bevorzugt 100% der betrachteten Fläche mindestens auf der dem Betrachter zugewandten oder abgewandten Seite des beheizbaren Glasfaservlieses eine Beschichtung, die mindestens ein Leitfähigkeitsadditiv und mindestens ein Bindemittel umfasst, auf,
- ist jedes elektrisch leitfähige Kontaktelement 0,0 bis 6,0 cm (wie 0,1 bis 6,0 cm) von dem Rand des beheizbaren Glasfaservlieses entfernt und parallel zu der zweiten Kante des beheizbaren Glasfaservlieses angeordnet, und
- steht jedes der elektrisch leitfähigen Kontaktelemente über dieselbe Kante des beheizbaren Glasfaservlieses um mindestens 10 cm, bevorzugt um mindestens 25 cm, mehr bevorzugt um mindestens 40 cm über.

In einer weiteren, bevorzugten Ausfiihrungsform
- weist das beheizbare Glasfaservlies (und somit das Glasfaservliesbauteil) die Form eines Rechtecks auf, wobei die Länge der ersten Kante 50,0 bis 100 cm und die Länge der zweiten Kante 2,00 bis 6,00 m beträgt, vorzugsweise die Länge der ersten Kante 50,0 bis 100 cm und die Länge der zweiten Kante 3,00 bis 6,00 m beträgt,
- weist das beheizbare Glasfaservlies zwei bis acht, vorzugsweise zwei bis vier, voneinander getrennte Bereiche, welche mit der Beschichtung, die mindestens ein Leitfähigkeitsadditiv und mindestens ein Bindemittel umfasst, beschichtet sind, auf, wobei diese Bereiche in Form eines Quadrats oder Rechtecks, vorzugsweise in Form eines Rechtecks ausgeführt sind,
- erstreckt sich jeder dieser Bereiche von der zweiten Kante des beheizbaren Glasfaservlieses zu der Kante die zu dieser zweiten Kante parallel ist, oder ist maximal 10,0 cm, bevorzugt maximal 8,00 cm, noch mehr bevorzugt maximal 6,0 cm (wie 0,1 cm) jeweils von der zweiten Kante des beheizbaren Glasfaservlieses und der Kante die zu dieser zweiten Kante parallel ist, entfernt und parallel zueinander angeordnet,
- weist jeder dieser Bereiche eine Fläche von 0,25 bis 2,00 m² auf,
- ist jedes elektrisch leitfähige Kontaktelement 0,0 bis 10,0 cm (wie 0,1 bis 10,0 cm), mehr bevorzugt 0,0 bis 8,0 cm (wie 0,1 bis 8,0 cm), noch mehr bevorzugt 0,0 bis 6,0 cm (wie 0,1 bis 6,0 cm) von dem Rand des beheizbaren Glasfaservlieses entfernt und parallel zu der zweiten Kante des beheizbaren Glasfaservlieses angeordnet,
- ist jedes der elektrisch leitfähigen Kontaktelemente auf derselben Seite des beheizbaren Glasfaservlieses wie die Beschichtung, die mindestens ein Leitfähigkeitsadditiv und mindestens ein Bindemittel umfasst, angebracht, und jedes der elektrisch leitfähigen Kontaktelemente steht über dieselbe Kante des beheizbaren Glasfaservlieses um mindestens 10 cm, bevorzugt um mindestens 25 cm, mehr bevorzugt mindestens 40 cm über,
- beträgt der Abstand zwischen zwei Bereichen, mindestens 10,0 cm, bevorzugt mindestens 30,0 cm und am meisten bevorzugt mindestens 50,0 cm, und
- weist das Glasfaservliesbauteil optional eine Vliesschicht auf, die auf derselben Seite wie die Beschichtung, die mindestens ein Leitfähigkeitsadditiv und mindestens ein Bindemittel umfasst, und die elektrisch leitfähigen Kontaktelemente angebracht ist, wobei diese Vliesschicht normalerweise kein Leitfähigkeitsadditiv enthält und/oder ein Flächengewicht von nicht mehr als 100 g/m², bevorzugt nicht mehr als 60 g/m² und mehr bevorzugt nicht mehr als 30 g/m² aufweist. Diese Vliesschicht, falls vorhanden, kann ein Kunststoff- und/oder ein Glasfaservlies aufweisen bzw. daraus bestehen, beispielsweise ein Glasfaservlies aufweisen bzw. daraus bestehen.

Im Folgenden werden alle Ausfiihrungsformen des erfindungsgemäßen beheizbaren Glasfaservlieses und des erfindungsgemäßen Glasfaservliesbauteils beschrieben, es sei denn, es wird ausdrücklich auf etwas anderes verwiesen.

Das erfindungsgemäße beheizbare Glasfaservlies und das erfindungsgemäße Glasfaservliesbauteil sind vorzugsweise durch Beaufschlagung mit einer Schutzkleinspannung betreibbar. Üblicherweise wird hierzu die Beschichtung, die mindestens ein Leitfähigkeitsadditiv und mindestens ein Bindemittel umfasst, mit einer Schutzkleinspannung beaufschlagt. Geeignete Spannungsquellen und Steuerungselemente hierfür werden unten, unter anderem im dritten erfindungsgemäßen Aspekt (Kit zum Herstellen eines Glasfaservliesbauteils), beschrieben.

Das beheizbare Glasfaservlies und das erfindungsgemäße Glasfaservliesbauteil können dazu verwendet werden, Temperaturen zu erzeugen, die üblicherweise im Inneren eines Hauses (wie eines Wohnhauses) vorgefunden werden, beispielweise eine Temperatur im Bereich von 15 bis 30°C. Dabei kann die maximale Oberflächentemperatur des beheizbaren Glasfaservlieses/Glasfaservliesbauteils bis zu 50°C betragen, insbesondere wenn sich das beheizbare Glasfaservlies/Glasfaservliesbauteil am Boden und/oder in einem Bereich einer Wand befindet, der für Personen erreichbar ist (typischerweise in einem Bereich der Wand, der einen Abstand vom Boden von weniger als 2,5 m aufweist). Wenn das beheizbare Glasfaservlies/Glasfaservliesbauteil sich in einem Bereich einer Wand befindet, der für Personen nicht erreichbar ist (typischerweise in einem Bereich der Wand, der mindestens einen Abstand von 2,5 m vom Boden aufweist und/oder an einer Decke, z.B. an einer entsprechenden Schräge eines Raumes), kann die maximale Oberflächentemperatur des beheizbaren Glasfaservlieses/Glasfaservliesbauteils bis zu 120°C (wie bis zu 110°C, bis zu 100°C, bis zu 90°C, bis zu 80°C oder bis zu 70°C) betragen. In einer Ausführungsform ist auch vorgesehen, das erfindungsgemäße beheizbare Glasfaservlies/Glasfaservliesbauteil dazu zu verwenden, höhere als übliche Raumtemperaturen zu erreichen, beispielsweise Temperaturen, die in einer Sauna vorgefunden werden (z.B. 80°C bis 120°C, wie 85°C bis 110°C).

Bei der Beheizung von Gegenständen ist die Oberflächentemperatur entsprechend zu wählen. Falls Oberflächen beheizt werden sollen, mit denen Personen in Kontakt kommen bzw. in Kontakt kommen können, wie beispielsweise Griffe von Werkzeugen, Rohre in einer Höhe von weniger als 2,5 m etc., sollte die Oberflächentemperatur des beheizbaren Glasfaservlieses/Glasfaservliesbauteils nicht mehr als 50°C, vorzugsweise nicht mehr als 42°C betragen. Falls ein Kontakt mit Personen normalerweise ausgeschlossen ist, kann die maximale Oberflächentemperatur des beheizbaren Glasfaservlieses/Glasfaservliesbauteils bis zu 120°C (wie bis zu 110°C, bis zu 100°C, bis zu 90°C, bis zu 80°C oder bis zu 70°C) betragen.

Das erfindungsgemäße beheizbare Glasfaservlies/Glasfaservliesbauteil ist insbesondere dazu geeignet, einen Raum zu beheizen, wobei es nicht darauf ankommt, wie der Raum ausgestattet ist oder wo er sich befindet. Z.B. kann der Raum ein Teil eines Hauses oder Gebäudes (d.h. immobil) sein; der Begriff "Raum" schließt aber auch mobile Varianten (wie Container) ein. Der Begriff "Wand" schließt erfindungsgemäß jegliche Begrenzung eines Raumes ein, wobei Fenster ausgeschlossen sind. Der Begriff "Wand" umfasst insbesondere neben den vertikalen Wänden (tragend oder nicht tragend) auch eventuell vorhandene Trennwände, eventuell vorhandene Schrägen und Decken des Raumes (einschließlich Abhängdecke). Der Begriff "Boden" schließt erfindungsgemäß jede begehbare Fläche, auch außerhalb von Räumen (beispielsweise Straßen, Geh- und Radwege, Parkplätze etc.), ein, wobei transparente Böden ausgeschlossen sind. Der Begriff "Boden" umfasst insbesondere neben horizontalen Böden auch eventuell vorhandene Schrägen, wie beispielsweise Auffahrten, Rollstuhlrampen, etc. Der Begriff "Gegenstand" schließt erfindungsgemäß jeden Gegenstand ein, der mittels des erfindungsgemäßen Glasfaservlieses beheizbar ist, beispielsweise Rohre, Werkzeuge, Sitzgelegenheiten, etc. Insbesondere schließt der Begriff "Gegenstand" keinen "Raum", "Wand" oder "Decke" ein, wie vorstehend definiert.

Das erfindungsgemäße beheizbare Glasfaservlies/Glasfaservliesbauteil weist den Vorteil auf, dass es zum Beheizen von Räumen verwendet werden kann, in denen die Raumluft möglichst wenig bewegt werden soll (z.B. Patientenzimmer oder Operationssäle von Krankenhäusern, Zimmer von Allergikern, etc.). Ein weiterer Vorteil besteht darin, dass das erfindungsgemäße beheizbare Glasfaservlies/Glasfaservliesbauteil direkt an einer Wand angebracht ist und bei Betrieb die Temperatur dieser Wand über der Raumtemperatur liegt. Folglich wird Wasser, das sich an (oder in) dieser Wand befindet, eher verdunsten (im Gegensatz zu herkömmlichen Systemen, bei denen Wasser eher an den Wänden kondensiert), was insgesamt einer Schimmelbildung vorbeugt. Zudem weist das erfindungsgemäße beheizbare Glasfaservlieses/Glasfaservliesbauteil eine höhere Flexibilität als viele andere Boden-, Wand- und/oder Deckenkonstruktionen auf (beispielsweise Baustoffplatten, Betonwände, gemauerte Wände etc.), in denen Haarrisse entstehen können. Derartige Haarrisse können die Heizleistung direkt darauf angebrachter Heizschichten verringern bzw. im schlimmsten Fall diese Schichten unbrauchbar machen, was bei dem erfindungsgemäßen beheizbaren Glasfaservlies/Glasfaservliesbauteil vermieden werden kann. Falls ein Gegenstand beheizt wird, beispielsweise ein Rohr, welches mit dem erfindungsgemäßen Glasfaservlies umwickelt ist, kann das erfindungsgemäße Glasfaservlies thermische Ausdehnungen aufgrund der bewirkten Heizung normalerweise ebenfalls besser kompensieren als beheizbare Beschichtungen. Ein weiterer Vorteil liegt darin, dass mittels des erfindungsgemäßen beheizbaren Glasfaservlieses/Glasfaservliesbauteils elektromagnetische Strahlung abschirmbar ist. Um diese Abschirmung zu erreichen, wird das beheizbare Glasfaservlies/Glasfaservliesbauteil nicht mit elektrischen Strom oder elektrischer Spannung beaufschlagt, sondern auf Erdung gelegt.

### Kit zum Herstellen eines Glasfaservliesbauteils

Bezüglich der Ausgestaltung der Komponenten des erfindungsgemäßen Kits wird vollinhaltlich auf die vorstehenden Ausführungen bezüglich des ersten (beheizbares Glasfaservlies) und zweiten (Glasfaservliesbauteil) erfindungsgemäßen Aspekt verwiesen.

Der optional in dem Kit zum Herstellen eines Glasfaservliesbauteils gemäß des dritten erfindungsgemäßen Aspektes enthaltene Glasgewebekleber kann ein üblicher Glasgewebekleber sein. Vorzugsweise ist der Gewebekleber ein lösemittelfreier Dispersionskleber, beispielsweise eine Polyvinylacetatdispersion, gefüllt mit Calciumcarbonat.

Vorzugsweise umfasst das erfindungsgemäße Kit ferner
(4) ein Steuerungselement, das eine Spannungsquelle, vorzugsweise eine Spannungsquelle für Schutzkleinspannung, und eine Steuerungsvorrichtung zum Steuern eines beheizbaren Glasfaservlieses umfasst, und
(5) zwei elektrische Leitungen, wobei die erste elektrische Leitung mit einem der Pole der Spannungsquelle verbindbar oder verbunden ist und die zweite elektrische Leitung mit dem anderen Pol der Spannungsquelle verbindbar oder verbunden ist und die erste elektrische Leitung mit einem der mindestens zwei elektrisch leitfähigen Kontaktelementen elektrisch leitend verbindbar ist und die zweite elektrische Leitung mit einem der anderen der mindestens zwei elektrisch leitfähigen Kontaktelementen elektrisch leitend verbindbar ist.

### Steuerungselement

Das Steuerungselement umfasst eine Spannungsquelle (zur Bereitstellung von elektrischer Spannung und/oder elektrischem Strom) und eine Steuerungsvorrichtung zum Steuern des beheizbaren Glasfaservlieses/Glasfaservliesbauteils.

Der Begriff "Spannungsquelle" soll erfindungsgemäß eine jegliche elektrische Energiequelle umfassen, die geeignet ist, eine elektrische Spannung und/oder einen elektrischen Strom bereitzustellen. In einer Ausführungsform ist die Spannungsquelle ein Netzteil, d.h. ein Gerät oder eine Baugruppe, das/die an das Hausstromnetz (typischerweise 230 V AC ± 10%, 50/60 Hz) angeschlossen werden kann und andere Geräte oder Baugruppen, die andere Spannungen und/oder Ströme benötigen, als vom Hausstromnetz bereitgestellt wird, mit Energie versorgt. Das Netzteil kann ein Schalt- oder Trafonetzteil sein. In einer Ausführungsform stellt die Spannungsquelle eine Wechselspannung (insbesondere im Schutzkleinspannungsbereich) bereit oder ist derart konfiguriert und ausgestaltet, eine Wechselspannung (insbesondere im Schutzkleinspannungsbereich) bereitzustellen. In einer alternativen Ausführungsform stellt die Spannungsquelle eine Gleichspannung (insbesondere im Schutzkleinspannungsbereich) bereit oder ist derart konfiguriert und ausgestaltet, eine Gleichspannung (insbesondere im Schutzkleinspannungsbereich) bereitzustellen.

In einer Ausführungsform ist die Spannungsquelle derart ausgelegt und konfiguriert, mehr als eine (z.B. mindestens 2, mindestens 3 oder mindestens 4) beheizbare Glasfaservliese/Glasfaservliesbauteile, oder, falls das/die beheizbare(n) Glasfaservlies(e)/Glasfaservliesbauteil(e) mehrere voneinander getrennte Bereiche, welche mit der Beschichtung, die mindestens ein Leitfähigkeitsadditiv und mindestens ein Bindemittel umfasst, beschichtet sind, diese Bereiche, mit Spannung (und/oder elektrischem Strom) gleichzeitig versorgen zu können. Beispielsweise können alle vorhandenen beheizbaren Glasfaservliese/Glasfaservliesbauteile und/oder alle voneinander getrennte Bereiche, welche mit der Beschichtung, die mindestens ein Leitfähigkeitsadditiv und mindestens ein Bindemittel umfasst, beschichtet sind, falls vorhanden, mit derselben elektrischen Spannung (und/oder demselben elektrischem Strom) beaufschlagt werden. Alternativ können alle vorhandenen beheizbaren Glasfaservliese/Glasfaservliesbauteile und/oder alle voneinander getrennte Bereiche, welche mit der Beschichtung, die mindestens ein Leitfähigkeitsadditiv und mindestens ein Bindemittel umfasst, beschichtet sind, falls vorhanden, individuell mit elektrischer Spannung und/oder elektrischem Strom beaufschlagt werden, d.h. dass alle der beheizbaren Glasfaservliese/Glasfaservliesbauteile und/oder alle voneinander getrennte Bereiche, welche mit der Beschichtung, die mindestens ein Leitfähigkeitsadditiv und mindestens ein Bindemittel umfasst, beschichtet sind, falls vorhanden, mit jeweils unterschiedlicher elektrischer Spannung und/oder unterschiedlichem elektrischen Strom beaufschlagbar sind.

Die Steuerungsvorrichtung ist vorzugsweise derart konfiguriert und ausgestaltet, das(die) beheizbare(n) Glasfaservlies(e)/Glasfaservliesbauteil(e) und/oder die voneinander getrennte Bereiche, welche mit der Beschichtung, die mindestens ein Leitfähigkeitsadditiv und mindestens ein Bindemittel umfasst, beschichtet sind, falls vorhanden, zu steuern, d.h. zu steuern, mit welcher elektrischen Spannung und/oder welchem elektrischen Strom das/die beheizbare(n) Glasfaservlies(e)/Glasfaservliesbauteil(e) und/oder die voneinander getrennte Bereiche, welche mit der Beschichtung, die mindestens ein Leitfähigkeitsadditiv und mindestens ein Bindemittel umfasst, beschichtet sind, falls vorhanden, beaufschlagt wird(werden), um die gewünschte Temperatur zu erreichen.

In einer bevorzugten Variante dieser Ausführungsform ist die Steuerungsvorrichtung derart ausgelegt und konfiguriert, dass jedes der vorhandenen beheizbaren Glasfaservliese/Glasfaservliesbauteile, und/oder jeder der voneinander getrennten Bereiche, welche mit der Beschichtung, die mindestens ein Leitfähigkeitsadditiv und mindestens ein Bindemittel umfasst, beschichtet sind, falls vorhanden, individuell, d.h. mit einer unterschiedlichen Spannung (und/oder elektrischem Strom), beaufschlagbar sind. Hierdurch kann eine Feinabstimmung der Heizleistung der einzelnen beheizbaren Glasfaservliese/Glasfaservliesbauteile und/oder der einzelnen voneinander getrennten Bereiche, welche mit der Beschichtung, die mindestens ein Leitfähigkeitsadditiv und mindestens ein Bindemittel umfasst, beschichtet sind, falls vorhanden, erreicht werden und beispielsweise eine Heizung, die dem Benutzer "zu warm" ist, heruntergedreht werden oder eine zu kalte Fläche etwas heraufgedreht werden. Insbesondere bevorzugt in dieser Variante ist, dass das Steuerungselement derart ausgelegt und konfiguriert ist, dass die Spannung (und/oder der elektrische Strom), die(der) an jedes einzelne der beheizbaren Glasfaservliese/Glasfaservliesbauteile und/oder an jeden der voneinander getrennten Bereiche, welche mit der Beschichtung, die mindestens ein Leitfähigkeitsadditiv und mindestens ein Bindemittel umfasst, beschichtet sind, falls vorhanden, angelegt wird, in dem Steuerungselement voreinstellbar ist, insbesondere bevorzugt ist, dass das Steuerungselement derart ausgelegt und konfiguriert ist, dass die Spannung (und/oder der elektrische Strom), die(der) an jedes einzelne der an jedes einzelne der beheizbaren Glasfaservliese/Glasfaservliesbauteile und/oder jeden der voneinander getrennten Bereiche, welche mit der Beschichtung, die mindestens ein Leitfähigkeitsadditiv und mindestens ein Bindemittel umfasst, beschichtet sind, falls vorhanden, angelegt wird, relativ zueinander in dem Steuerungselement voreinstellbar ist. Beispielsweise ließe sich bei zwei beheizbaren Glasfaservliesen/Glasfaservliesbauteilen A und B voreinstellen, dass das beheizbare Glasfaservlies/Glasfaservliesbauteil A mit 90% der Spannung (und/oder des elektrischen Stroms) des beheizbaren Glasfaservlieses/Glasfaservliesbauteils B betrieben wird oder, dass das beheizbare Glasfaservlies/Glasfaservliesbauteil A mit 2 V weniger als das beheizbare Glasfaservlies/Glasfaservliesbauteil B betrieben wird etc.

Hierzu ist es zweckmäßig, dass in einer Ausführungsform das Steuerungselement einen Thermostat aufweist, der insbesondere derart konfiguriert und ausgestaltet ist, die Temperatur des Raumes, in dem sich das(die) erfindungsgemäße(n) beheizbare(n) Glasfaservlies(e)/Glasfaservliesbauteil(e) befindet(befinden), messen und gegebenenfalls überwachen zu können. Zweckmäßig ist der Thermostat derart konfiguriert und ausgestaltet, mit der Steuerungsvorrichtung kommunizieren zu können. Vorteilhafterweise ist der Thermostat in dem Raum, in dem sich das das(die) erfindungsgemäße(n) beheizbare(n) Glasfaservlies(e)/Glasfaservliesbauteil(e) befindet(befinden), angebracht, jedoch vorzugsweise nicht direkt neben einem erfindungsgemäßen beheizbaren Glasfaservlies/Glasfaservliesbauteil, sondern eher an auf einem Teil des Bodens und/oder einer Wand, auf dem/der kein erfindungsgemäßes beheizbares Glasfaservlies/Glasfaservliesbauteil aufgebracht ist (beispielsweise kann sich der Thermostat an einer Wand des Raumes befinden, die der Wand gegenüberliegt, an die das(die) erfindungsgemäße(n) beheizbare(n) Glasfaservlies(e)/Glasfaservliesbauteil(e) angebracht ist(sind)). In einer Ausführungsform ist der Thermostat derart konfiguriert und ausgestaltet, dass an ihm die gewünschte Raumtemperatur (Solltemperatur) einstellbar ist.

In einer Ausfiihrungsform misst die Steuerungsvorrichtung im Betrieb fortwährend den elektrischen Strom, der durch das(die) erfindungsgemäße(n) beheizbare(n) Glasfaservlies(e)/Glasfaservliesbauteil(e) und/oder die voneinander getrennten Bereiche, welche mit der Beschichtung, die mindestens ein Leitfähigkeitsadditiv und mindestens ein Bindemittel umfasst, beschichtet sind, falls vorhanden, fließt, und vergleicht diesen mit einem Normalwert/Referenzwert. Dadurch kann sichergestellt werden, dass Fehlfunktionen eines erfindungsgemäßen beheizbaren Glasfaservlieses/Glasfaservliesbauteils, (z.B. Funkenbildung) oder mechanische Änderungen an dem/der zu beheizenden Boden, Wand und/oder Decke nicht zu einer unsicheren Situation bzw. Gefährdung von Personen und/oder Tieren führen. Beispielsweise weist in einer Ausführungsform das Steuerungselement eine Abschaltautomatik der Spannungsquelle auf. Hierzu kann das Steuerungselement derart konfiguriert und ausgestaltetet sein, dass es die Entstehung von Funken auf dem erfindungsgemäßen beheizbaren Glasfaservlies/Glasfaservliesbauteil und/oder auf den voneinander getrennten Bereichen, welche mit der Beschichtung, die mindestens ein Leitfähigkeitsadditiv und mindestens ein Bindemittel umfasst, beschichtet sind, falls vorhanden, erkennt und bei Auftreten derartiger Funken die Abschaltautomatik aktiviert, d.h. die Spannungsquelle abschaltet. Alternativ oder zusätzlich ist das Steuerungselement derart konfiguriert und ausgestaltetet, dass es überwacht, welche Strommenge durch das(die) erfindungsgemäße(n) beheizbare(n) Glasfaservlies(e)/Glasfaservliesbauteil(e) und/oder die voneinander getrennten Bereiche, welche mit der Beschichtung, die mindestens ein Leitfähigkeitsadditiv und mindestens ein Bindemittel umfasst, beschichtet sind, falls vorhanden, fließt, und bei einer Abweichung von mindestens 1% (wie mindestens 5% oder mindestens 10%) des durch das(die) erfindungsgemäße(n) beheizbare(n) Glasfaservlies(e)/Glasfaservliesbauteil(e) und/oder die voneinander getrennten Bereiche, welche mit der Beschichtung, die mindestens ein Leitfähigkeitsadditiv und mindestens ein Bindemittel umfasst, beschichtet sind, falls vorhanden, fließenden Stroms vom Normalwert/Referenzwert die Abschaltautomatik aktiviert, d.h. die Spannungsquelle abschaltet.

In einer Ausführungsform weist das Steuerungselement einen Temperatursensor, der auf dem erfindungsgemäßen beheizbaren Glasfaservlies/Glasfaservliesbauteil angebracht werden kann, auf. Der Temperatursensor ist vorteilhafterweise derart ausgestaltet und konfiguriert, die Temperatur unmittelbar auf oder über dem erfindungsgemäßen beheizbaren Glasfaservlies/Glasfaservliesbauteil und/oder auf oder über einem der voneinander getrennten Bereiche, welche mit der Beschichtung, die mindestens ein Leitfähigkeitsadditiv und mindestens ein Bindemittel umfasst, beschichtet sind, falls vorhanden, zu messen und die Messdaten an den Thermostat und/oder die Steuerungsvorrichtung weiterzuleiten. Dadurch ist eine Gefährdung durch eine übermäßig heißes beheizbares Glasfaservlies/Glasfaservliesbauteil und/oder einen übermäßig heißen voneinander getrennten Bereich, welcher mit der Beschichtung, die mindestens ein Leitfähigkeitsadditiv und mindestens ein Bindemittel umfasst, beschichtet sind, falls vorhanden, (z.B. mit einer Temperatur an der Oberfläche des beheizbaren Glasfaservlieses/Glasfaservliesbauteils und/oder voneinander getrennten Bereich, welcher mit der Beschichtung, die mindestens ein Leitfähigkeitsadditiv und mindestens ein Bindemittel umfasst, beschichtet sind, falls vorhanden, von über 50°C (insbesondere falls das(die) erfindungsgemäße(n) beheizbare(n) Glasfaservlies(e)/Glasfaservliesbauteil(e) am Boden und/oder an einem Bereich einer Wand angebracht ist(sind), der für Personen erreichbar ist)) oder mit einer Temperatur an der Oberfläche des beheizbaren Glasfaservlieses/Glasfaservliesbauteils und/oder voneinander getrennten Bereichs, welcher mit der Beschichtung, die mindestens ein Leitfähigkeitsadditiv und mindestens ein Bindemittel umfasst, beschichtet sind, falls vorhanden, von über 70°C oder über 120°C (insbesondere falls das(die) erfindungsgemäße(n) beheizbare(n) Glasfaservlies(e)/Glasfaservliesbauteil(e) und/oder die voneinander getrennten Bereiche, welcher mit der Beschichtung, die mindestens ein Leitfähigkeitsadditiv und mindestens ein Bindemittel umfasst, beschichtet sind, falls vorhanden, an einer Decke und/oder einem Bereich einer Wand angebracht ist(sind), der für Personen nicht erreichbar ist) verhinderbar. Bei einem Gegenstand ist der Thermostat und/oder der Temperatursensor, sofern vorhanden, entsprechend der Ausgestaltung des Gegenstandes anzubringen. Beispielsweise kann sich bei einem Rohr der Temperatursensor auch an der Innenseite des Rohres oder an einem Abschnitt des Rohres befinden, der, in Strömungsrichtung des Rohres gesehen, sich nach dem/den beheizbaren Glasfaservlies(en)/Glasfaservliesbauteil(en) befindet.

Das Steuerungselement kann in dem Raum, der das(die) erfindungsgemäße(n) beheizbare(n) Glasfaservlies(e)/Glasfaservliesbauteil(e) enthält, angebracht sein. In einer alternativen Ausführungsform kann sich das Steuerungselement an einem anderen Ort (z.B. in einem Nebenraum, in einem zentralen Schalt- oder Sicherungsraum, an den der zu beheizende Raum angeschlossen ist, oder in einem Keller) befinden. Bei Gegenständen ist die Anbringung entsprechend der Ausgestaltung des Gegenstandes durchzuführen. Insbesondere bei ortsfesten Gegenständen kann das Steuerungselement in der Nähe des Gegenstandes angebracht sein oder sich beispielsweise in einem Nebenraum, in einem zentralen Schalt- oder Sicherungsraum etc. befinden. Bei mobilen Gegenständen, z.B. Werkzeugen, ist das Steuerungselement üblicherweise Teil des Gegenstandes.

Der elektrische Anschluss an die Kontaktelemente kann beispielsweise als Anschlussklemme ausgeführt sein, die z.B. als Stecker für eine Steckverbindung ausgeführt sein können oder ein Loch aufweisen, durch das ein Kabel, beispielsweise mittels Schraube und Kabelschuh, befestigt werden kann. Beispielsweise kann zur Kontaktierung der Kontaktelemente ein flaches Metallstück an dem jeweiligen Kontaktelement angebracht werden, z.B. mittels Schrauben, die durch das jeweilige Kontaktelement geführt werden. Dieses flache Metallstück kann ferner dazu ausgelegt sein, eine elektrische Leitung anzuschließen, beispielsweise ausgelegt sein, dass eine Flachsteckhülse aufgesteckt werden kann. Alternativ könnte beispielsweise auch ein Kabelschuh an einer der ggf. vorhandenen Schrauben befestigt werden. Ggf. muss eine zusätzliche Zugentlastung angebracht werden. Derartige Zugentlastungen sind aus dem Stand der Technik bekannt.

Die Fläche des Metallstückes, die auf dem Kontaktelement aufliegt, beträgt üblicherweise zwischen 1,0 und 6,0 cm², vorzugsweise 2,0 bis 4,0 cm².

### Gegenstand, Boden, Wand und/oder Decke

Die vorliegende Erfindung ist ferner gerichtet auf einen Gegenstand, einen Boden, eine Wand und/oder eine Decke, enthaltend ein beheizbares Glasfaservlies gemäß der vorliegenden Erfindung oder ein Glasfaservliesbauteil gemäß der vorliegenden Erfindung.

Bezüglich der Ausgestaltung der Komponenten des/der erfindungsgemäßen Gegenstandes, Bodens, Wand und/oder Decke wird vollumfänglich auf den ersten (beheizbares Glasfaservlies) und zweiten (Glasfaservliesbauteil) erfindungsgemäßen Aspekt verwiesen.

Das erfindungsgemäße beheizbare Glasfaservlies und Glasfaservliesbauteil ermöglichen einen einfachen Gegenstand-, Wand- und/oder Deckenaufbau, insbesondere, wenn es mit einer Schutzkleinspannung betrieben wird, ohne dass zusätzliche Schichten benötigt werden.

Daher ist es bevorzugt, dass die Wand und/oder Decke vorzugsweise ein Substrat ausgewählt aus einer Spanplatte, Holzplatte, MDF-Platte, OSB-Platte, Hart-PVC-Platte, Polystyrolplatte, Fliesenlegerplatte, Bauplatte, z.B. Fliesenverlegeplatte, Thermoplatte, Thermopanel, Thermovlies, Innendämmplatte, Klimaplatte, Acrylglas, Gipskartonplatte, einer Gipsfaserplatte, mineralischem Putz, Kunststoffputz, Beton, einer Dispersions-Wandfarbe, vorzugsweise auf Acrylat- oder Polyvinylacetat-Basis, und einer Dispersions-Silikat-Wandfarbe, umfasst, und sich zwischen dem Substrat und dem beheizbaren Glasfaservlies gemäß der vorliegenden Erfindung bzw. dem Glasfaservliesbauteil gemäß der vorliegenden Erfindung nicht mehr als eine Grundierung und/oder eine Kleberschicht befindet. Insbesondere bevorzugt ist das Substrat ausgewählt aus einer Gipskartonplatte, einer Gipsfaserplatte, mineralischem Putz, Kunststoffputz, Beton, einer Dispersions-Wandfarbe, vorzugsweise auf Acrylat- oder Polyvinylacetat-Basis, und einer Dispersions-Silikat-Wandfarbe.

Vorzugsweise befindet sich auf der dem Substrat abgewandten Seite des beheizbaren Glasfaservlieses gemäß der vorliegenden Erfindung bzw. des Glasfaservliesbauteils gemäß der vorliegenden Erfindung nicht mehr als eine Putz-/Trennfarbe, eine Wandfarbe und ggf. eine Vliesschicht, wobei diese Vliesschicht, sofern vorhanden, normalerweise kein Leitfähigkeitsadditiv enthält, mehr bevorzugt enthalten ferner die Putz-/Trennfarbe und die Wandfarbe, sofern vorhanden, kein Leitfähigkeitsadditiv. Eine derartige Vliesschicht, falls vorhanden, weist vorzugsweise ein Flächengewicht von nicht mehr als 100 g/m², mehr bevorzugt nicht mehr als 60 g/m² und noch mehr bevorzugt nicht mehr als 30 g/m² auf.

Falls das beheizbare Glasfaservlies gemäß der vorliegenden Erfindung bzw. das Glasfaservliesbauteil gemäß der vorliegenden Erfindung in einem Boden enthalten ist, so befindet sich vorzugsweise das beheizbare Glasfaservlies gemäß der vorliegenden Erfindung bzw. das Glasfaservliesbauteil gemäß der vorliegenden Erfindung direkt unterhalb des Nutzbelages des Bodens und
(i) der Nutzbelag des Bodens und das beheizbare Glasfaservlies gemäß der vorliegenden Erfindung bzw. das Glasfaservliesbauteil gemäß der vorliegenden Erfindung sind beide schwimmend verlegt;
(ii) der Nutzbelag des Bodens und das beheizbare Glasfaservlies gemäß der vorliegenden Erfindung bzw. das Glasfaservliesbauteil gemäß der vorliegenden Erfindung sind miteinander und mit dem darunterliegenden Teil des Bodens verklebt; oder
(iii) das beheizbare Glasfaservlies gemäß der vorliegenden Erfindung bzw. das Glasfaservliesbauteil gemäß der vorliegenden Erfindung ist mit dem darunterliegenden Teil des Bodens verklebt und der Nutzbelag ist schwimmend verlegt.

### Verwendungen

Das erfindungsgemäße beheizbare Glasfaservlies oder das erfindungsgemäße Glasfaservliesbauteil oder das mittels des erfindungsgemäßen Kits hergestellten Glasfaservliesbauteil können zum Beheizen eines Gegenstandes, eines Bodens und/oder eines Raumes oder zum Abschirmen eines Gegenstandes und/oder Raumes vor elektromagnetischer Strahlung verwendet werden.

Hinsichtlich der Ausgestaltung der erfindungsgemäßen Verwendung wird vollinhaltlich auf die vorstehenden Ausführungen bezüglich des ersten (beheizbares Glasfaservlies), zweiten (Glasfaservliesbauteil) und dritten (Kit zum Herstellen eines Glasfaservliesbauteils) erfindungsgemäßen Aspektes Bezug genommen.

### Verfahren

Das erfindungsgemäße beheizbare Glasfaservlies oder das erfindungsgemäße Glasfaservliesbauteil oder das mittels des erfindungsgemäßen Kits hergestellte Glasfaservliesbauteil können an eine(n) oder mehrere Gegentand/Gegenstände, Boden/Böden, Wand/Wände und/oder Decke(n) angebracht werden und durch Beaufschlagen des/der beheizbaren Glasfaservliese(s) oder des/der Glasfaservliesbauteils/Glasfaservliesbauteile mit elektrischer Spannung und/oder elektrischem Strom kann ein Gegenstand und/oder Raum beheizt werden.

Hinsichtlich der Ausgestaltung des erfindungsgemäßen Verfahrens wird vollinhaltlich auf die vorstehenden Ausführungen bezüglich des ersten (beheizbares Glasfaservlies), zweiten (Glasfaservliesbauteil) und dritten (Kit zum Herstellen eines Glasfaservliesbauteils) erfindungsgemäßen Aspektes Bezug genommen.

Die Beaufschlagung des/der beheizbaren/beheizbarer Glasfaservliese(s) oder des/der Glasfaservliesbauteils/Glasfaservliesbauteile erfolgt vorzugsweise durch ein Steuerungselement, elektrische Leitungen, Kontaktelemente und/oder Anschlussklemmen wie hierin im zweiten (Glasfaservliesbauteil) und dritten (Kit zum Herstellen eines Glasfaservliesbauteils) erfindungsgemäßen Aspekt beschrieben, auf die vollinhaltlich Bezug genommen wird.

Die Erfindung ist ferner vorzugsweise durch folgende Punkte charakterisiert:
1. Beheizbares Glasfaservlies, umfassend eine Beschichtung, die mindestens ein Leitfähigkeitsadditiv und mindestens ein Bindemittel umfasst, wobei das Flächengewicht des beheizbaren Glasfaservlieses mindestens 250 g/m² beträgt.
2. Beheizbares Glasfaservlies gemäß Punkt 1, wobei das Flächengewicht des beheizbaren Glasfaservlieses mindestens 275 g/m², vorzugsweise mindestens 300 g/m², mehr bevorzugt mindestens 325 g/m² beträgt.
3. Beheizbares Glasfaservlies gemäß einem der vorangegangenen Punkte, wobei der Gewichtsanteil der Beschichtung, die mindestens ein Leitfähigkeitsadditiv und mindestens ein Bindemittel umfasst, mindestens 30%, vorzugsweise mindestens 35%, mehr bevorzugt mindestens 40%, bezogen auf die Summe der Gewichte des Bereiches des Glasfaservlieses welcher mit der Beschichtung, die mindestens ein Leitfähigkeitsadditiv und mindestens ein Bindemittel umfasst, beschichtet ist, vor Auftragung der Beschichtung, die mindestens ein Leitfähigkeitsadditiv und mindestens ein Bindemittel umfasst, und der Beschichtung, die mindestens ein Leitfähigkeitsadditiv und mindestens ein Bindemittel umfasst, beträgt.
4. Beheizbares Glasfaservlies gemäß einem der vorangegangenen Punkte, wobei die Dicke des beheizbaren Glasfaservlieses zwischen 0,20 und 1,00 mm, vorzugsweise zwischen 0,25 und 0,90 mm, mehr bevorzugt zwischen 0,30 und 0,50 mm beträgt.
5. Beheizbares Glasfaservlies gemäß einem der vorangegangenen Punkte, wobei die Höchstzugkraft des beheizbaren Glasfaservlieses in Längs- und/oder Querrichtung mindestens 120 N/5 cm beträgt, vorzugsweise die Höchstzugkraft des beheizbaren Glasfaservlieses in Längs- und/oder Querrichtung mindestens 135 N/5 cm beträgt, mehr bevorzugt die Höchstzugkraft des beheizbaren Glasfaservlieses
   - in Längsrichtung mindestens 160 N/5 cm und/oder
   - in Querrichtung mindestens 135 N/5 cm,
   beträgt, mehr bevorzugt die Höchstzugkraft des beheizbaren Glasfaservlieses
   - in Längsrichtung mindestens 175 N/5 cm und/oder
   - in Querrichtung mindestens 145 N/5 cm
   beträgt.
6. Beheizbares Glasfaservlies gemäß einem der vorangegangenen Punkte, aufweisend eine Fläche von 50,0 cm² bis 6,00 m², vorzugsweise aufweisend eine Fläche von 225 cm² bis 6,00 m² und noch mehr bevorzugt aufweisend eine Fläche von 400 cm² bis 6,00 m², beispielsweise beträgt die Fläche des beheizbaren Glasfaservlieses in Draufsicht nicht mehr als 3,00 m², nicht mehr als 2,00 m² oder nicht mehr als 1,50 m² oder das beheizbare Glasfaservlies weist eine Fläche von bis zu 500 m² auf und ist in Abschnitte dieser Größen teilbar.
7. Beheizbares Glasfaservlies gemäß einem der vorangegangenen Punkte aufweisend die Form eines Quadrates, eines Rechtecks, einer Raute oder eines Parallelogramms, wobei die kürzere Kante des Rechtecks oder Parallelogramms als erste Kante und die längere Kante des Rechtecks oder Parallelogramms als zweite Kante angesehen wird.
8. Beheizbares Glasfaservlies gemäß Punkt 7,
   (i) aufweisend die Form eines Rechtecks oder Parallelogramms, wobei die erste Kante des beheizbaren Glasfaservlieses eine Länge von 8,00 bis 100 cm, bevorzugt von 15,0 bis 100 cm und am meisten bevorzugt von 20,0 cm bis 100 cm aufweist und/oder die zweite Kante des beheizbaren Glasfaservlieses weist eine Länge von 8,00 bis 600 cm, bevorzugt von 15,0 bis 600 cm und am meisten bevorzugt von 20,0 cm bis 600 cm auf, oder die zweite Kante des beheizbaren Glasfaservlieses gemäß der vorliegenden Erfindung weist eine Länge von bis zu 500 m auf und ist in Abschnitte einer Länge von 8,00 bis 600 cm, mehr bevorzugt von 15,0 bis 600 cm und am meisten bevorzugt von 20,0 cm bis 600 cm, beispielsweise 20,0 bis 250 cm, 20,0 bis 200 cm oder 20,0 bis 150 cm, teilbar,
      oder
   (ii)als Quadrat und Raute ausgeführt, wobei alle Kanten eine Länge von 8,00 bis 100 cm, bevorzugt von 15,0 bis 100 cm und am meisten bevorzugt von 20,0 cm bis 100 cm aufweisen.
9. Beheizbares Glasfaservlies gemäß Punkt 7 aufweisend die Form eines Rechtecks oder Parallelogramms oder Punkt 8(i), wobei das Seitenverhältnis zwischen der ersten Kante des Parallelogramms bzw. Rechtecks und der zweiten Kante des Parallelogramms bzw. Rechtecks zwischen 0,20 und < 1,00 beträgt, bevorzugt beträgt das Seitenverhältnis zwischen der ersten Kante des Parallelogramms bzw. Rechtecks und der zweiten Kante des Parallelogramms bzw. Rechtecks zwischen 0,40 und 0,80, noch mehr bevorzugt zwischen 0,50 und 0,70.
10. Beheizbares Glasfaservlies gemäß Punkt 7 aufweisend die Form eines Rechtecks oder Parallelogramms oder Punkt 8(i), aufweisend die Form eines Rechtecks oder Parallelogramms, wobei das Seitenverhältnis zwischen der ersten Kante des Parallelogramms bzw. Rechtecks und der zweiten Kante des Parallelogramms bzw. Rechtecks weniger als 0,40, vorzugsweise weniger als 0,30, mehr bevorzugt weniger als 0,20, beispielsweise weniger als 0,10, weniger als 0,05 oder weniger als 0,025.
11. Beheizbares Glasfaservlies gemäß einem der vorangegangenen Punkte, wobei das mindestens eine Leitfähigkeitsadditiv ausgewählt ist aus Leitfähigkeitsadditiven, die Graphit, Graphen und Ruß umfassen.
12. Beheizbares Glasfaservlies gemäß einem der vorangegangenen Punkte, wobei das mindestens eine Bindemittel ein elektrisch nicht leitfähiges Polymer oder ein anorganisches Bindemittel umfasst.
13. Beheizbares Glasfaservlies gemäß einem der vorangegangenen Punkte, wobei der Gewichtsanteil des mindestens einen Leitfähigkeitsadditivs zwischen 10 bis 90 Gew.%, vorzugsweise zwischen 20 bis 80 Gew.%, mehr bevorzugt 30 bis 70 Gew.% bezogen auf das Gesamtgewicht der Beschichtung, die mindestens ein Leitfähigkeitsadditiv und mindestens ein Bindemittel umfasst, beträgt.
14. Glasfaservliesbauteil, umfassend das beheizbare Glasfaservlies gemäß einem der vorangegangenen Punkte 1 bis 13 und mindestens zwei elektrisch leitfähige Kontaktelemente, die an das beheizbare Glasfaservlies derart angeordnet sind, dass das beheizbare Glasfaservlies mit elektrischer Spannung und/oder elektrischem Strom beaufschlagbar ist.
15. Glasfaservliesbauteil gemäß Punkt 14, wobei zwei der mindestens zwei elektrisch leitfähigen Kontaktelemente an sich gegenüberliegenden Randbereichen des beheizbaren Glasfaservlieses angeordnet sind.
16. Glasfaservliesbauteil gemäß einem der Punkte 14 oder 15, wobei jedes elektrisch leitfähige Kontaktelement einen elektrisch leitenden Metallstreifen, insbesondere aus Kupfer, umfasst, wobei vorzugsweise jedes dieser elektrisch leitfähigen Kontaktelemente eine Klebeschicht aufweist, die sich auf der dem beheizbaren Glasfaservlies abgewandten Seite der elektrisch leitfähigen Kontaktelemente befindet, die Klebeschicht ist insbesondere mit einer Schutzfolie bedeckt.
17. Glasfaservliesbauteil gemäß einem der vorangegangenen Punkte 14 bis 16, wobei die Gesamtdicke jedes elektrisch leitfähigen Kontaktelements maximal 120 µm, vorzugsweise maximal 110 µm, mehr bevorzugt maximal 90 µm beträgt.
18. Glasfaservliesbauteil gemäß einem der vorangegangenen Punkte 14 bis 17, wobei die mindestens zwei elektrisch leitfähigen Kontaktelemente parallel angeordnet sind und der Abstand zwischen ihren Innenkanten mindestens 30 cm, vorzugsweise mindestens 40 cm, mehr bevorzugt mindestens 50 cm beträgt und/oder die mindestens zwei elektrisch leitfähigen Kontaktelemente sind parallel angeordnet und der Abstand zwischen ihren Innenkanten beträgt nicht mehr als 3,00 m, vorzugsweise nicht mehr als 2,00 m und am meisten bevorzugt nicht mehr als 1,00 m.
19. Glasfaservliesbauteil gemäß einem der vorangegangenen Punkte 14 bis 18, wobei jedes der elektrisch leitfähigen Kontaktelemente über eine Kante des beheizbaren Glasfaservlieses um mindestens 10 cm, vorzugsweise um mindestens 25 cm, mehr bevorzugt um mindestens 40 cm übersteht.
20. Glasfaservliesbauteil gemäß einem der vorangegangenen Punkte 14 bis 19, wobei jedes elektrisch leitfähige Kontaktelement eine Breite von 1,4 bis 4,4 cm, vorzugsweise von 1,9 bis 3,9 cm, mehr bevorzugt von 2,4 bis 3,4 cm aufweist.
21. Glasfaservliesbauteil gemäß einem der vorangegangenen Punkte 14 bis 20, wobei jedes elektrisch leitfähige Kontaktelement 0,0 bis 10,0 cm, vorzugsweise 0,0 bis 8,0 cm, mehr bevorzugt 0,0 bis 6,0 cm von dem Rand des beheizbaren Glasfaservlieses entfernt angeordnet ist.
22. Glasfaservliesbauteil gemäß einem der vorangegangenen Punkte 14 bis 21, welches durch Beaufschlagung mit einer Schutzkleinspannung betreibbar ist.
23. Kit zum Herstellen eines Glasfaservliesbauteils, wobei das Kit umfasst:
   (1) ein beheizbares Glasfaservlies gemäß einem der vorangegangenen Punkte 1 bis 13,
   (2) mindestens zwei elektrisch leitfähige Kontaktelemente, und
   (3) optional, Glasgewebekleber.
24. Kit gemäß Punkt 23, ferner umfassend:
   (4) ein Steuerungselement, das eine Spannungsquelle, vorzugsweise eine Spannungsquelle für Schutzkleinspannung, und eine Steuerungsvorrichtung zum Steuern eines beheizbaren Glasfaservlieses umfasst, und
   (5) zwei elektrische Leitungen, wobei die erste elektrische Leitung mit einem der Pole der Spannungsquelle verbindbar oder verbunden ist und die zweite elektrische Leitung mit dem anderen Pol der Spannungsquelle verbindbar oder verbunden ist und die erste elektrische Leitung mit einem der mindestens zwei elektrisch leitfähigen Kontaktelementen elektrisch leitend verbindbar ist und die zweite elektrische Leitung mit einem der anderen der mindestens zwei elektrisch leitfähigen Kontaktelementen elektrisch leitend verbindbar ist.
25. Kit gemäß Punkt 24, wobei das Steuerungselement eine Abschaltautomatik der Spannungsquelle aufweist, wobei vorzugsweise bei (I) Entstehung von Funken in dem Glasfaservlies oder (II) einer Abweichung von mindestens 1% des durch das beheizbare Glasfaservlies fließenden Stroms vom Normalwert die Abschaltautomatik aktiviert, d.h. die Spannungsquelle abgeschaltet wird.
26. Kit gemäß einem der Punkte 24 oder 25, wobei das Steuerungselement ferner einen Thermostat aufweist.
27. Gegenstand, Boden, Wand und/oder Decke, enthaltend ein beheizbares Glasfaservlies gemäß einem der vorangegangenen Punkte 1 bis 13 oder ein Glasfaservliesbauteil gemäß einem der vorangegangenen Punkte 14 bis 22 oder eines mittels des Kits gemäß einem der Punkte 23 bis 26 hergestellten Glasfaservliesbauteils.
28. Wand und/oder Decke gemäß Punkt 27, wobei die Wand und/oder Decke ein Substrat ausgewählt aus einer Spanplatte, Holzplatte, MDF-Platte, OSB-Platte, Hart-PVC-Platte, Polystyrolplatte, Fliesenlegerplatte, Bauplatte, z.B. Fliesenverlegeplatte, Thermoplatte, Thermopanel, Thermovlies, Innendämmplatte, Klimaplatte, Acrylglas, Gipskartonplatte, einer Gipsfaserplatte, mineralischem Putz, Kunststoffputz, Beton, einer Dispersions-Wandfarbe, vorzugsweise auf Acrylat- oder Polyvinylacetat-Basis, und einer Dispersions-Silikat-Wandfarbe, umfasst, und sich zwischen dem Substrat und dem beheizbaren Glasfaservlies gemäß einem der vorangegangenen Punkte 1 bis 13 bzw. dem Glasfaservliesbauteil gemäß einem der vorangegangenen Punkte 14 bis 22 nicht mehr als eine Grundierung und/oder eine Kleberschicht befindet.
29. Wand und/oder Decke gemäß Punkt 28, wobei sich auf der dem Substrat abgewandten Seite des beheizbaren Glasfaservlieses gemäß einem der vorangegangenen Punkte 1 bis 13 bzw. des Glasfaservliesbauteils gemäß einem der vorangegangenen Punkte 14 bis 22 nicht mehr als eine Putz-/Trennfarbe, eine Wandfarbe und ggf. eine Vliesschicht befindet, wobei die Vliesschicht, sofern vorhanden, kein Leitfähigkeitsadditiv enthält.
30. Boden gemäß Punkt 27, wobei sich das beheizbaren Glasfaservlies gemäß einem der vorangegangenen Punkte 1 bis 13 bzw. das Glasfaservliesbauteil gemäß einem der vorangegangenen Punkte 14 bis 22 direkt unterhalb des Nutzbelages des Bodens befindet und
   (i) der Nutzbelag des Bodens und das beheizbaren Glasfaservlies gemäß einem der vorangegangenen Punkte 1 bis 13 bzw. das Glasfaservliesbauteil gemäß einem der vorangegangenen Punkte 14 bis 22 sind beide schwimmend verlegt;
   (ii) der Nutzbelag des Bodens und das beheizbaren Glasfaservlies gemäß einem der vorangegangenen Punkte 1 bis 13 bzw. das Glasfaservliesbauteil gemäß einem der vorangegangenen Punkte 14 bis 22 sind miteinander und mit dem darunterliegenden Teil des Bodens verklebt; oder
   (iii) das beheizbaren Glasfaservlies gemäß einem der vorangegangenen Punkte 1 bis 13 bzw. das Glasfaservliesbauteil gemäß einem der vorangegangenen Punkte 14 bis 22 ist mit dem darunterliegenden Teil des Bodens verklebt und der Nutzbelag ist schwimmend verlegt.
31. Verwendung des beheizbaren Glasfaservlieses gemäß einem der Punkte 1 bis 13 oder des Glasfaservliesbauteils gemäß einem der Punkte 14 bis 22 oder eines mittels des Kits gemäß einem der Punkte 23 bis 26 hergestellten Glasfaservliesbauteils zum Beheizen eines Gegenstand, eines Bodens und/oder Raumes oder zum Abschirmen eines Gegenstandes und/oder Raumes vor elektromagnetischer Strahlung.
32. Verfahren zum Beheizen eines Gegenstand, eines Bodens und/oder eines Raumes, umfassend die Schritte:
   (i) Anbringen eines oder mehrerer beheizbaren/beheizbarer Glasfaservliese(s) gemäß einem der Punkte 1 bis 13 oder eines oder mehrerer Glasfaservliesbauteils/Glasfaservliesbauteile gemäß einem der Punkte 14 bis 22 an dem Gegenstand, dem Boden, eine oder mehrere Wand/Wände und/oder Decke(n), und
   (ii) Beaufschlagen des/der beheizbaren/beheizbarer Glasfaservliese(s) oder des/der Glasfaservliesbauteils/Glasfaservliesbauteile mit elektrischer Spannung und/oder elektrischem Strom.

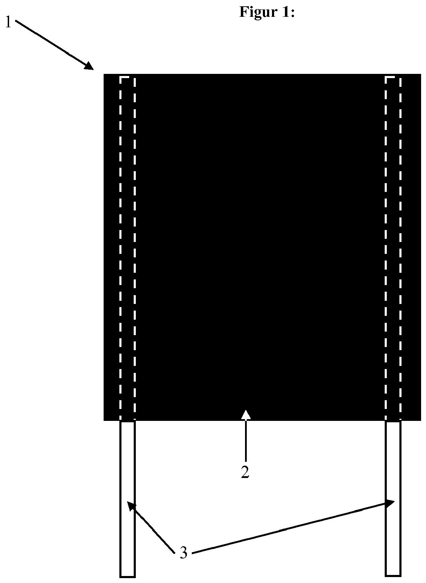

Figur 1 ist eine schematische, nicht maßstabsgetreue Vorderansicht eines bevorzugten Ausführungsbeispiels des Glasfaservliesbauteils (1) gemäß der vorliegenden Erfindung. Das Glasfaservliesbauteil (1) weist ein beheizbares Glasfaservlies (2) und zwei Kontaktelemente (3) auf. Die gestrichelten Linien in Figur 1 zeigen die Anordnung der Kontaktelemente (3) hinter dem Glasfaservlies (2). Das gezeigte Glasfaservliesbauteil (1) kann dadurch hergestellt werden, dass die Beschichtung, die mindestens ein Leitfähigkeitsadditiv und mindestens ein Bindemittel umfasst, auf ein Glasfaservlies aufgetragen wird und anschließend die Kontaktelemente daran angebracht werden, beispielsweise angeklebt werden.

### Bezugszeichenliste:

1. Glasfaservliesbauteil
2. beheizbares Glasfaservlies
3. Kontaktelement

## Patentansprüche

1. Beheizbares Glasfaservlies, umfassend eine Beschichtung, die mindestens ein Leitfähigkeitsadditiv und mindestens ein Bindemittel umfasst, wobei das Flächengewicht des beheizbaren Glasfaservlieses mindestens 250 g/m² beträgt.

2. Beheizbares Glasfaservlies gemäß Anspruch 1, wobei das Flächengewicht des beheizbaren Glasfaservlieses mindestens 275 g/m², vorzugsweise mindestens 300 g/m², mehr bevorzugt mindestens 325 g/m² beträgt.

3. Beheizbares Glasfaservlies gemäß einem der vorangegangenen Ansprüche, wobei die Höchstzugkraft des beheizbaren Glasfaservlieses in Längs- und/oder Querrichtung mindestens 120 N/5 cm beträgt, vorzugsweise die Höchstzugkraft des beheizbaren Glasfaservlieses in Längs- und/oder Querrichtung mindestens 135 N/5 cm beträgt, mehr bevorzugt die Höchstzugkraft des beheizbaren Glasfaservlieses
- in Längsrichtung mindestens 160 N/5 cm und/oder
- in Querrichtung mindestens 135 N/5 cm,
beträgt, mehr bevorzugt die Höchstzugkraft des beheizbaren Glasfaservlieses
- in Längsrichtung mindestens 175 N/5 cm und/oder
- in Querrichtung mindestens 145 N/5 cm
beträgt.

4. Beheizbares Glasfaservlies gemäß einem der vorangegangenen Ansprüche, aufweisend eine Fläche von 50,0 cm² bis 6,00 m², vorzugsweise aufweisend eine Fläche von 225 cm² bis 6,00 m² und noch mehr bevorzugt aufweisend eine Fläche von 400 cm² bis 6,00 m², beispielsweise beträgt die Fläche des beheizbaren Glasfaservlieses in Draufsicht nicht mehr als 3,00 m², nicht mehr als 2,00 m² oder nicht mehr als 1,50 m² oder das beheizbare Glasfaservlies weist eine Fläche von bis zu 500 m² auf und ist in Abschnitte dieser Größen teilbar.

5. Beheizbares Glasfaservlies gemäß einem der vorangegangenen Ansprüche, wobei das mindestens eine Leitfähigkeitsadditiv ausgewählt ist aus Leitfähigkeitsadditiven, die Graphit, Graphen und Ruß umfassen und/oder das mindestens eine Bindemittel ein elektrisch nicht leitfähiges Polymer oder ein anorganisches Bindemittel umfasst..

6. Glasfaservliesbauteil, umfassend das beheizbare Glasfaservlies gemäß einem der vorangegangenen Ansprüche 1 bis 5 und mindestens zwei elektrisch leitfähige Kontaktelemente, die an das beheizbare Glasfaservlies derart angeordnet sind, dass das beheizbare Glasfaservlies mit elektrischer Spannung und/oder elektrischem Strom beaufschlagbar ist.

7. Glasfaservliesbauteil gemäß Anspruch 6, wobei zwei der mindestens zwei elektrisch leitfähigen Kontaktelemente an sich gegenüberliegenden Randbereichen des beheizbaren Glasfaservlieses angeordnet sind.

8. Glasfaservliesbauteil gemäß einem der Ansprüche 6 oder 7, wobei jedes elektrisch leitfähige Kontaktelement einen elektrisch leitenden Metallstreifen, insbesondere aus Kupfer, umfasst, wobei vorzugsweise jedes dieser elektrisch leitfähigen Kontaktelemente eine Klebeschicht aufweist, die sich auf der dem beheizbaren Glasfaservlies abgewandten Seite der elektrisch leitfähigen Kontaktelemente befindet, die Klebeschicht ist insbesondere mit einer Schutzfolie bedeckt.

9. Glasfaservliesbauteil gemäß einem der vorangegangenen Ansprüche 6 bis 8, wobei die mindestens zwei elektrisch leitfähigen Kontaktelemente parallel angeordnet sind und der Abstand zwischen ihren Innenkanten mindestens 30 cm, vorzugsweise mindestens 40 cm, mehr bevorzugt mindestens 50 cm beträgt und/oder die mindestens zwei elektrisch leitfähigen Kontaktelemente sind parallel angeordnet und der Abstand zwischen ihren Innenkanten beträgt nicht mehr als 3,00 m, vorzugsweise nicht mehr als 2,00 m und am meisten bevorzugt nicht mehr als 1,00 m.

10. Kit zum Herstellen eines Glasfaservliesbauteils, wobei das Kit umfasst:
(1) ein beheizbares Glasfaservlies gemäß einem der vorangegangenen Ansprüche 1 bis 5,
(2) mindestens zwei elektrisch leitfähige Kontaktelemente, und
(3) optional, Glasgewebekleber.

11. Kit gemäß Anspruch 11, ferner umfassend:
(4) ein Steuerungselement, das eine Spannungsquelle, vorzugsweise eine Spannungsquelle für Schutzkleinspannung, und eine Steuerungsvorrichtung zum Steuern eines beheizbaren Glasfaservlieses umfasst, und
(5) zwei elektrische Leitungen, wobei die erste elektrische Leitung mit einem der Pole der Spannungsquelle verbindbar oder verbunden ist und die zweite elektrische Leitung mit dem anderen Pol der Spannungsquelle verbindbar oder verbunden ist und die erste elektrische Leitung mit einem der mindestens zwei elektrisch leitfähigen Kontaktelementen elektrisch leitend verbindbar ist und die zweite elektrische Leitung mit einem der anderen der mindestens zwei elektrisch leitfähigen Kontaktelementen elektrisch leitend verbindbar ist.

12. Gegenstand, Boden, Wand und/oder Decke, enthaltend ein beheizbares Glasfaservlies gemäß einem der vorangegangenen Ansprüche 1 bis 5 oder ein Glasfaservliesbauteil gemäß einem der vorangegangenen Ansprüche 6 bis 9 oder eines mittels des Kits gemäß einem der Ansprüche 10 und 11 hergestellten Glasfaservliesbauteils.

13. Wand und/oder Decke gemäß Anspruch 12, wobei die Wand und/oder Decke ein Substrat ausgewählt aus einer Spanplatte, Holzplatte, MDF-Platte, OSB-Platte, Hart-PVC-Platte, Polystyrolplatte, Fliesenlegerplatte, Bauplatte, z.B. Fliesenverlegeplatte, Thermoplatte, Thermopanel, Thermovlies, Innendämmplatte, Klimaplatte, Acrylglas, Gipskartonplatte, einer Gipsfaserplatte, mineralischem Putz, Kunststoffputz, Beton, einer Dispersions-Wandfarbe, vorzugsweise auf Acrylat- oder Polyvinylacetat-Basis, und einer Dispersions-Silikat-Wandfarbe, umfasst, und sich zwischen dem Substrat und dem beheizbaren Glasfaservlies gemäß einem der vorangegangenen Ansprüche 1 bis 5 bzw. dem Glasfaservliesbauteil gemäß einem der vorangegangenen Ansprüche 6 bis 9 nicht mehr als eine Grundierung und/oder eine Kleberschicht befindet.

14. Verwendung des beheizbaren Glasfaservlieses gemäß einem der Ansprüche 1 bis 5 oder des Glasfaservliesbauteils gemäß einem der Ansprüche 6 bis 9 oder eines mittels des Kits gemäß einem der Ansprüche 10 und 11 hergestellten Glasfaservliesbauteils zum Beheizen eines Gegenstand, eines Bodens und/oder Raumes oder zum Abschirmen eines Gegenstandes und/oder Raumes vor elektromagnetischer Strahlung.

15. Verfahren zum Beheizen eines Gegenstand, eines Bodens und/oder eines Raumes, umfassend die Schritte:
(i) Anbringen eines oder mehrerer beheizbaren/beheizbarer Glasfaservliese(s) gemäß einem der Ansprüche 1 bis 5 oder eines oder mehrerer Glasfaservliesbauteils/Glasfaservliesbauteile gemäß einem der Ansprüche 6 bis 9 an dem Gegenstand, dem Boden, eine oder mehrere Wand/Wände und/oder Decke(n), und
(ii) Beaufschlagen des/der beheizbaren/beheizbarer Glasfaservliese(s) oder des/der Glasfaservliesbauteils/Glasfaservliesbauteile mit elektrischer Spannung und/oder elektrischem Strom.
